# EUROPEAN PATENT APPLICATION

(11) **EP 1 849 754 A1**
(43) Date of publication of application: **31.10.2007**
(21) Application number: 06713135.9
(22) Date of filing: 06.02.2006
(51) Int. Cl.: C04B 37/00, B01D 39/20, B01D 53/86, F01N 3/02

(54) **HONEYCOMB STRUCTURE**

(30) Priority: 17.02.2005 JP 2005040476
(71) Applicant: IBIDEN CO., LTD., Ogaki-shi, Gifu-ken 503-8604 (JP)
(72) Inventor: OHNO, Kazushige, ta, Ibigawacho, Ibi-gun, Gifu, 5010695 (JP); TAKAMATSU, Shoji, ta, Ibigawacho, Ibi-gun, Gifu, 5010695 (JP)
(74) Representative: HOFFMANN EITLE
(86) International application number: PCT/JP2006/301992
(87) International publication number: WO 2006/087932

(57) **Abstract**

An obj ect of the present invention is to provide a honeycomb structured body in which a crack in a cell wall that separates the cells of the honeycomb structured body hardly occurs when the honeycomb structured body is housed in the casing, and the honeycomb structured body of the present invention is a honeycomb structured body comprising one or a plurality of pillar-shaped honeycomb structural ceramic members, in each of which cells having a tetragonal shape or a shape similar to a tetragonal shape on a cross-section perpendicular to the longitudinal direction are placed in parallel with one another in the longitudinal direction with a cell wall therebetween, wherein a sealing material layer is formed on a peripheral portion of the honeycomb structured body, and on the cross-section perpendicular to the longitudinal direction in the honeycomb structural ceramic member, among cell walls, each of the cell walls that are continuously formed from the peripheral side of the honeycomb structured body toward the inside of the honeycomb structured body is allowed to form a straight line, where the straight line makes an angle from 55° to 90° relative to a tangent at an intersection with the peripheral edge of a honeycomb structural ceramic member which forms the peripheral portion of the honeycomb structured body.

## Description

### TECHNICAL FIELD

The present invention relates to a honeycomb structured body that is used for a filter which removes particulates and the like, and for a catalyst supporting carrier and the like, contained in exhaust gases discharged from an internal combustion engine such as a diesel engine.

### BACKGROUND ART

Recently, particulates, such as soot, contained in exhaust gases that are discharged from internal combustion engines of vehicles, such as buses and trucks, and construction machines, have raised serious problems as contaminants harmful to the environment and the human body.
With respect to the filter that captures particulates in exhaust gases to purify the exhaust gases, for example, those which use a honeycomb structured body that is made from a porous ceramic material and is constituted by ceramic blocks, each of the ceramic blocks having a sealing material layer formed on the peripheral portion and a structure in which a plurality of honeycomb units, each of which is mainly composed of a porous ceramic material made from silicon carbide and has a structure in which a number of cells are placed in parallel with one after another in the longitudinal direction with a cell wall therebetween, are bonded to one another by interposing a sealing material layer, have been proposed (for example, see Patent Document 1).

The honeycomb structured body of this type is normally housed and secured in a casing that is connected to an exhaust-gas passage of an internal combustion engine to be used therein. Here, the honeycomb structured body is housed and secured therein, with a pressure being applied from the inner walls of the casing to the periphery of the honeycomb structured body so as to prevent positional deviations and the like in the casing.

When the honeycomb structured body, which is housed in the casing in this manner, is used, the honeycomb structured body is sometimes damaged or cracks sometimes occur in the cell wall that separates the cells of the honeycomb structured body, and these problems are considered to be caused by the pressure applied from the inner walls of the casing to the periphery of the honeycomb structured body.

In order to prevent the occurrence of cracks and the like in the cell wall that separates the cells, for example, a honeycomb structured body in which the thickness of the peripheral wall is made thicker only at predetermined portions on the periphery has been proposed (for example, see Patent Document 2).

Patent Document 1: JP-A 6-182228
Patent Document 2: JP-A 2003-260322

### DISCLOSURE OF THE INVENTION

### PROBLEMS TO BE SOLVED BY THE INVENTION

In the honeycomb structured body disclosed in Patent Document 2, the thickness of one portion of the peripheral wall is increased in an attempt to improve the strength. However, the isostatic strength of the honeycomb structured body is insufficient with only one portion of the peripheral wall having an increased thickness.
Moreover, since the thickness of one portion of the peripheral wall is increased, the filtering area on the cross section perpendicular to the longitudinal direction of the honeycomb structured body becomes smaller in comparison with the honeycomb structured body disclosed in Patent Document 1 and the like, and thus the honeycomb structured body disclosed in Patent Document 2 tends to have degradation in the pressure loss.
Furthermore, since the predetermined portion of the peripheral wall needs to be made thicker, another process for this purpose is required, making the manufacturing processes complicated.

### MEANS FOR SOLVING THE PROBLEMS

The present inventors have intensively studied in order to solve the above-mentioned problems, and completed the present invention.
The honeycomb structured body in accordance with the first aspect of the present invention is a honeycomb structured body comprising one or a plurality of pillar-shaped honeycomb structural ceramic members, in each of which cells having a tetragonal shape or a shape similar to a tetragonal shape on a cross-section perpendicular to the longitudinal direction are placed in parallel with one another in the longitudinal direction with a cell wall therebetween, wherein a sealing material layer is formed on a peripheral portion of the honeycomb structured body, and on the cross-section perpendicular to the longitudinal direction in the honeycomb structural ceramic member, among cell walls, each of the cell walls that are continuously formed from the peripheral side of the honeycomb structured body toward the inside of the honeycomb structured body is allowed to form a straight line, where the straight line makes an angle from 55° to 90° relative to a tangent at an intersection with the peripheral edge of a honeycomb structural ceramic member which forms the peripheral portion of the honeycomb structured body.

The honeycomb structured body in accordance with the first aspect of the present invention is desirably the honeycomb structured body comprising a plurality of honeycomb structural ceramic members, wherein at least one honeycomb structural ceramic member having a tetragonal profile on the cross-section perpendicular to the longitudinal direction, at least one honeycomb structural ceramic member having a shape surrounded by three straight lines and one curve on the cross-section perpendicular to the longitudinal direction, and at least one honeycomb structural ceramic member having a shape surrounded by two straight lines and one curve on the cross-section perpendicular to the longitudinal direction are included as the honeycomb structural ceramic members, and on the cross-section perpendicular to the longitudinal direction in the honeycomb structural ceramic member having the shape surrounded by two straight lines and one curve on the cross-section perpendicular to the longitudinal direction, among cell walls that are continuously formed from the peripheral side of the honeycomb structured body toward the inside of the honeycomb structured body, each of the cell walls that are continuously formed from the one curve toward either one of the two straight lines is allowed to form a straight line, where the straight line makes an angle from 55° to 90° relative to a tangent at an intersection with the one curve.

Moreover, it is desirable that, on the cross-section perpendicular to the longitudinal direction in the honeycomb structural ceramic member having the shape surrounded by three straight lines and one curve on the cross-section perpendicular to the longitudinal direction, among cell walls, each of the cell walls that are continuously formed from the straight line sandwiched by the two straight lines toward the one curve is allowed to form a straight line, where the straight line makes an angle from 55° to 90° relative to a tangent at an intersection with the one curve.

In the honeycomb structured body in accordance with the first aspect of the present invention, the shape of the honeycomb structured body on the cross-section perpendicular to the longitudinal direction is desirably surrounded by only a curve or a curve and a straight line.
Also, the shape surrounded by only a curve is desirably a round shape.

Furthermore, in the honeycomb structured body in accordance with the first aspect of the present invention, the porous ceramic is desirably made of silicon carbide based ceramic.
In addition, the honeycomb structured body in accordance with the first aspect of the present invention is desirably used as a filter for an exhaust gas purifying device of vehicles.

The honeycomb structured body in accordance with the second aspect of the present invention is a honeycomb structured body in which a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween, wherein a sealing material layer is formed on a peripheral portion of the honeycomb structured body; at least one honeycomb structural ceramic member having a tetragonal profile on the cross-section perpendicular to the longitudinal direction, at least one honeycomb structural ceramic member having a shape surrounded by three straight lines and one curve on the cross-section perpendicular to the longitudinal direction, and at least one honeycomb structural ceramic member having a shape surrounded by two straight lines and one curve on the cross-section perpendicular to the longitudinal direction, are included as the honeycomb structural ceramic members; and on the cross-section perpendicular to the longitudinal direction in the honeycomb structural ceramic member having the shape surrounded by two straight lines and one curve on the cross-section perpendicular to the longitudinal direction, among cell walls, each of the cell walls that are continuously formed from the peripheral side of the honeycomb structured body toward the inside of the honeycomb structured body and are continuously formed from the one curve toward either one of the two straight lines is allowed to form a straight line, where the straight line makes an angle from 70° to 90° relative to a tangent at the middle point of the one curve.

In the honeycomb structured body in accordance with the second aspect of the present invention, it is desirable that, on the cross-sectionperpendicular to the longitudinal direction in the honeycomb structural ceramic member having the shape surrounded by three straight lines and one curve on the cross-section perpendicular to the longitudinal direction, among cell walls, each of the cell walls that are continuously formed from the straight line sandwiched by the two straight lines toward the one curve is allowed to form a straight line, where the straight line makes an angle from 70° to 90° relative to a tangent at the middle point of the one curve.

In the honeycomb structured body in accordance with the second aspect of the present invention, the shape of the honeycomb structured body on the cross-section perpendicular to the longitudinal direction is desirably surrounded by only a curve or a curve and a straight line.
Also, the shape surrounded by only a curve is desirably a round shape.

Furthermore, in the honeycomb structured body in accordance with the second aspect of the present invention, the porous ceramic is desirably made of silicon carbide based ceramic.
In addition, the honeycomb structured body in accordance with the second aspect of the present invention is desirably used as a filter for an exhaust gas purifying device of vehicles.

The honeycomb structured body in accordance with the third aspect of the present invention is a honeycomb structured body in which a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween, wherein at an outer position in the honeycomb structured body, a honeycomb structural ceramic member, having a peripheral edge surrounded by a straight line and a curve on the cross-section perpendicular to the longitudinal direction, is placed, at an inner position in the honeycomb structured body, a honeycomb structural ceramic member, having a peripheral edge surrounded by only straight lines on the cross-section perpendicular to the longitudinal direction, is placed, a sealing material layer is formed on a peripheral portion of the honeycomb structured body, and the honeycomb structured body comprises: a honeycomb structural ceramic member that has a structure in which cell walls continuously formed toward the straight line portion of the peripheral edge are allowed to form a straight line, where an angle between the straight line and the straight line portion of the peripheral edge is 90° and a honeycomb structural ceramic member that has a structure in which the angle is in the range of 25° to 65°, as the honeycomb structural ceramic member placed at the outer position in the honeycomb structured body; and a honeycomb structural ceramic member that has a structure in which cell walls continuously formed toward the straight line portion of the peripheral edge are allowed to form a straight line, where an angle between the straight line and the straight line portion of the peripheral edge is 90°, as the honeycomb structural ceramic member placed at the inner position in the honeycomb structured body.

The honeycomb structured body in accordance with the third aspect of the present invention is desirably a honeycomb structured body, wherein the honeycomb structural ceramic members, which are located most closely to the respective vertexes of a hypothetical rectangle that inscribes the honeycomb structured body and has sides parallel with respective sides of the honeycomb structural ceramic member having a peripheral edge surrounded by only straight lines, are the honeycomb structural ceramic members placed at the outer position in the honeycomb structured body with the angle being in the range of 25° to 65°.

In the honeycomb structured body in accordance with the third aspect of the present invention, the shape of the honeycomb structured body on the cross-section perpendicular to the longitudinal direction is desirably surrounded by only a curve or a curve and a straight line.
Also, the shape surrounded by only a curve is desirably a round shape.

Furthermore, in the honeycomb structuredbody in accordance with the third aspect of the present invention, the porous ceramic is desirably made of silicon carbide based ceramic.
In addition, the honeycomb structured body in accordance with the third aspect of the present invention is desirably used as a filter for an exhaust gas purifying device of vehicles.

### EFFECTS OF THE INVENTION

.
In each of the honeycomb structured bodies in accordance with the first to third aspects of the present invention, since the cell walls have a predetermined shape, a sufficient isostatic strength is prepared so that upon being housed in a casing and used, the honeycomb structured body is hardly damaged, and cracks hardly occur in the cell wall that separates the cells of the honeycomb structured body. In each of the honeycomb structured bodies in accordance with the first to third aspects of the present invention, in addition to these effects, a sealingmaterial layer is formed on the peripheral portion thereof; therefore, when the honeycomb structured body is housed in the casing, a pressure to be applied from the inner walls of the casing is dispersed by the sealing material layer so that the pressure is evenly applied onto the honeycomb structured body to make the pressure hardly concentrated on a specific portion; consequently, the honeycomb structured body is hardly damaged and cracks hardly occur in the cell walls. Moreover, in each of the honeycomb structured bodies in accordance with the first to third aspects of the present invention, there is no reduction in the filtering area in comparison with a conventional honeycomb structured body so that it becomes possible to prevent the pressure loss from becoming high.

### BEST MODE FOR CARRYING OUT THE INVENTION

Firstly, the honeycomb structured body of the first aspect of the present invention is explained below.
The honeycomb structured body in accordance with the first aspect of the present invention is a honeycomb structured body comprising one or a plurality of pillar-shaped honeycomb structural ceramic members, in each of which cells having a tetragonal shape or a shape similar to a tetragonal shape on a cross-section perpendicular to the longitudinal direction are placed in parallel with one another in the longitudinal direction with a cell wall therebetween, wherein a sealing material layer is formed on a peripheral portion of the honeycomb structured body, and on the cross-section perpendicular to the longitudinal direction in the honeycomb structural ceramic member, among cell walls, each of the cell walls that are continuously formed from the peripheral side of the honeycomb structured body toward the inside of the honeycomb structured body is allowed to form a straight line, where the straight line makes an angle from 55° to 90° relative to a tangent at an intersection with the peripheral edge of a honeycomb structural ceramic member which forms the peripheral portion of the honeycomb structured body.
Meanwhile, in the following explanation on the present invention, unless otherwise indicated, the phrase simply referred to as "perpendicular cross-section" has the same meaning as the phrase "cross-section perpendicular to the longitudinal direction".

The above-mentioned honeycomb structured body may be a honeycomb structured body comprising one honeycomb structural ceramic member, or a honeycomb structured body comprising a plurality of honeycomb structural ceramic members combined with one another, and desirably, the honeycomb structured body comprising a plurality of honeycomb structural ceramic members combined with one another is used.
Specifically, a honeycomb structured body having the following configuration is desirable.

That is, desirably, the honeycomb structured body in accordance with the first aspect of the present invention is the honeycomb structured body comprising a plurality of honeycomb structural ceramic members, wherein at least one honeycomb structural ceramic member having a tetragonal profile on the cross-section perpendicular to the longitudinal direction, at least one honeycomb structural ceramic member having a shape surrounded by three straight lines and one curve on the cross-section perpendicular to the longitudinal direction, and at least one honeycomb structural ceramic member having a shape surrounded by two straight lines and one curve on the cross-section perpendicular to the longitudinal direction are included as the honeycomb structural ceramic members, and on the cross-section perpendicular to the longitudinal direction in the honeycomb structural ceramic member having the shape surrounded by two straight lines and one curve on the cross-section perpendicular to the longitudinal direction, among cell walls that are continuously formed from the peripheral side of the honeycomb structured body toward the inside of the honeycomb structured body, each of the cell walls that are continuously formed from the one curve toward either one of the two straight lines is allowed to form a straight line, where the straight line makes an angle from 55° to 90° relative to a tangent at an intersection with the one curve.

In the honeycomb structured body of the first aspect of the present invention, the cell walls that are continuously formed from the peripheral side of the honeycomb structured body toward the inside of the honeycomb structured body are defined as follows: referring to four straight lines that run through cell walls constituting each cell, among these straight lines, supposing that the straight line located closest to the center of the honeycomb structured body is taken as a reference straight line, and cell walls are classified into the cell wall that run through this reference straight line and the cell wall opposing to the above-mentioned cell wall, and the other cell walls, those cell walls to be defined refer to the cell walls that run through the reference straight line and the cell walls opposing to these cell walls which are the cell walls that are continuously formed in a collective manner.

Next, referring to the figures, the following description will discuss the honeycomb structured body according to the first aspect of the present invention.

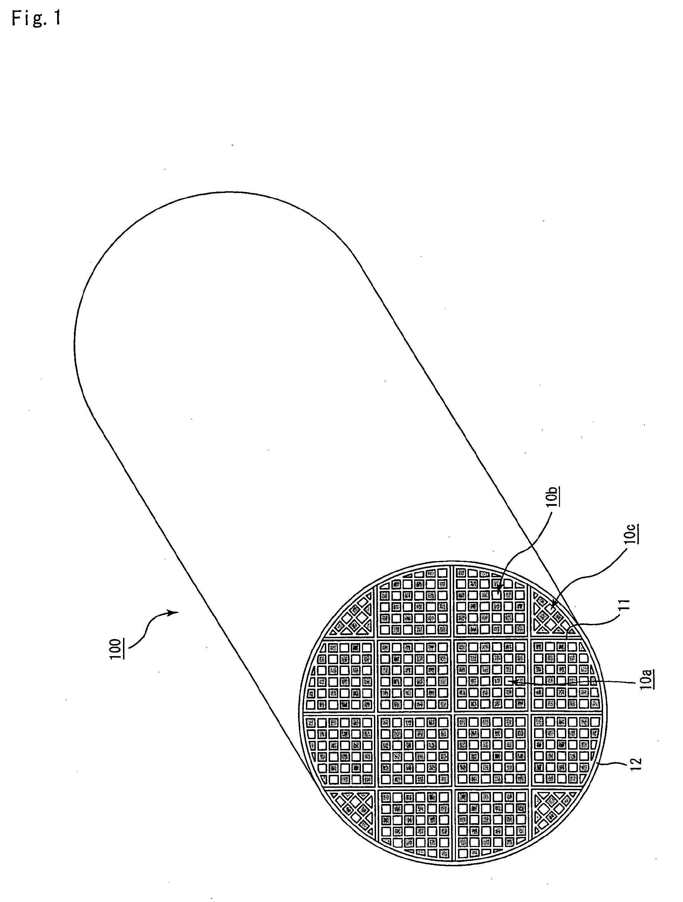

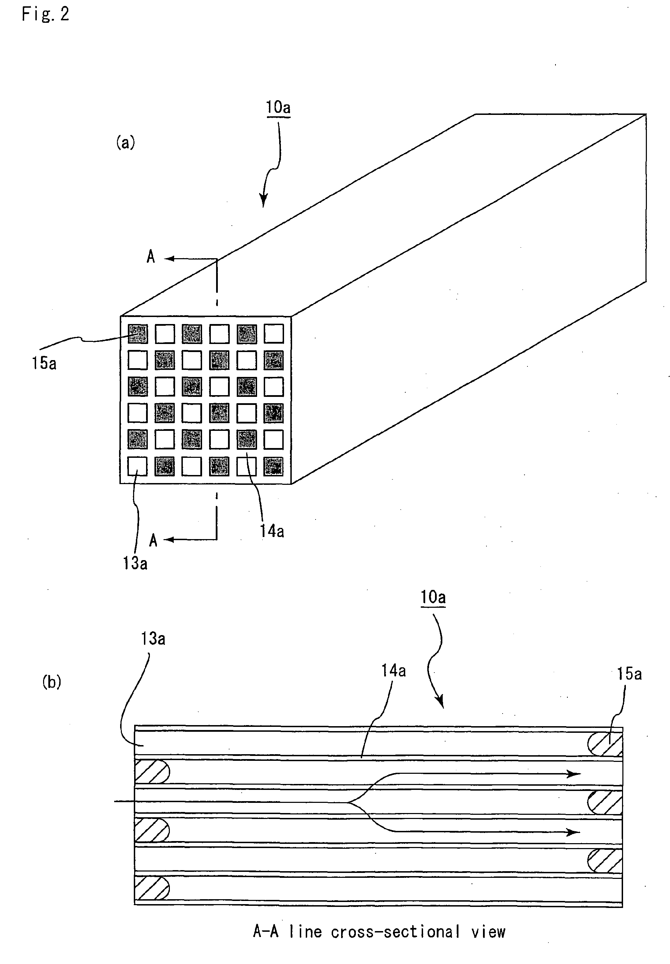

Fig. 1 is a perspective view that schematically shows one example of the honeycomb structured body according to the first aspect of the present invention; Fig. 2 (a) is a perspective view that shows one example of the honeycomb structural ceramic member constituting the honeycomb structured body shown in Fig. 1; and Fig. 2 (b) is a cross-sectional view taken along line A-A of the honeycomb structural ceramic member shown in Fig. 2 (a) ; and Figs 3, 4(a) and 4(b) respectively show another example of the honeycomb structural ceramic member constituting the honeycomb structured body shown in Fig. 1.

As shown in Fig. 1, a honeycomb structured body 100 has a structure in which sixteen pieces of honeycomb structural ceramic members 10a to 10c are combined with one another by interposing sealing material layers (adhesive layers) 11 with a sealing material layer (coat layer) 12 being formed on the peripheral portion of the honeycomb structured body. The sealing material layer 12 is formed on the peripheral portion of the honeycomb structured body in this manner; therefore, when the honeycomb structured body of the first aspect of the present invention is housed in a casing, a pressure to be applied from the inner walls of the casing is evenly dispersed so that it is possible to prevent the honeycomb structured body from being damaged and also to prevent cracks from occurring in the cell walls.
Now, the mode in which the honeycomb structured body is housed in the casing will be described later.

With respect to the honeycomb structural ceramic members, four pieces of honeycomb structural ceramic members 10a each having a tetragonal profile on a shape at the perpendicular cross-section, eight pieces of honeycomb structural ceramic members 10b each of which has a shape at the perpendicular cross-section surrounded by three straight lines and one curve, and four pieces of honeycomb structural ceramic members 10c each of which has a shape at the perpendicular cross-section surrounded by two straight lines and one curve are used.

Moreover, each of the honeycomb structural ceramic members has a shape such as a round or polygonal pillar in which tetragonal cells are placed in parallel with one another in the longitudinal direction with a cell wall therebetween on its shape at the perpendicular cross-section. Thus, each cell wall that separates the cells is allowed to function as a filter.
More specifically, for example, as shown by cells formed in the honeycomb structural ceramic member 10a shown in Figs. 2 (a) and 2 (b), either one of the end portions on the inlet side or outlet side of exhaust gases is sealed by a plug 15a so that exhaust gases that have entered one cell 13a are discharged from another cell after having always passed through each cell wall 14a that separates the cells 13a.

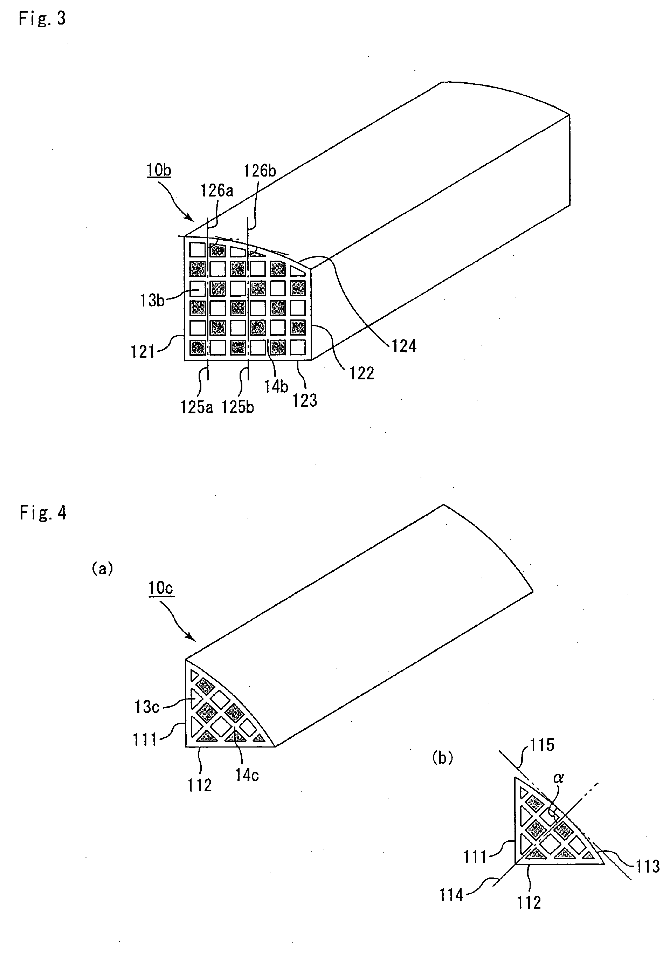

Moreover, the honeycomb structural ceramic member 10b having a shape at the perpendicular cross-section surrounded by three straight lines and one curve, as shown in Fig. 3, has the same structure as the honeycomb structural ceramic member 10a except that its shape at the perpendicular cross-section is different. In this figure, reference numeral 13b indicates a cell, and reference numeral 14b indicates a cell wall.
In the above-mentioned honeycomb structured body, cells each having a tetragonal shape or approximately a tetragonal shape at the perpendicular cross-section are placed in parallel with one after another in the longitudinal direction with a cell wall therebetween; however, as shown in Fig. 3, those cells located near a curved portion on the shape at the perpendicular cross-section, that is, those cells located close to the peripheral portion of the honeycomb structured body, do not necessarily have a tetragonal shape or approximately a tetragonal shape at the perpendicular cross-section. Therefore, the honeycomb structured body of the present invention is defined to include a honeycomb structured body in which: most of cells have a tetragonal shape or approximately a tetragonal shape at the perpendicular cross-section and with respect to only the cells located near the peripheral portion, cells are allowed to have a shape other than the tetragonal shape or approximately the tetragonal shape.
Here, the shape approximately a tetragonal shape includes a shape, for example, in which corner portions of a tetragon have a C-chamfered shape, a R-chamfered shape and the like.

As shown in Fig. 4, the honeycomb structural ceramic member 10c, which has a shape at the perpendicular cross-section surrounded by two straight lines and one curve, has a structure on its shape at the perpendicular cross-section in which, among cell walls, those cell walls, which are continuously formed from the peripheral portion of the honeycomb structured body toward the inside of the honeycomb structured body, and correspond to cell walls that are continuously formed from either one of the two straight lines 111 and 112 toward the curve 113, are allowed to form a straight line 114 and the like, and this straight line 114 and the like makes an angle from 55 to 90° relative to a tangent (see 115 and the like in Fig. 4(b)) at an intersection with the one curve 113.
The angle of less than 55° causes insufficient isostatic strength, and when housed in the casing, the honeycomb structured body tends to be damaged, and cracks tend to occur in the cell walls. Here, the angle is desirably set as closely to 90° as possible.
In Fig. 4, reference numeral 13c indicates a cell, and reference numeral 14c indicates a cell wall.

In the honeycomb structural ceramic member having the shape surrounded by two straight lines and one curve, those cell walls, each forming a straight line descending leftward, in the honeycomb structural ceramic member shown in Fig. 4(b), correspond to the cell walls continuously formed from the peripheral portion of the honeycomb structured body toward the inside of the honeycomb structured body. Moreover, other cell walls orthogonal to these cell walls do not correspond to the cell walls continuously formed from the peripheral portion of the honeycomb structured body toward the inside of the honeycomb structured body.

In the honeycomb structured body 100, in the same manner, the honeycomb structural ceramic member 10b, which has a shape at the perpendicular cross-section surrounded by three straight lines and one curve, has a structure on its shape at the perpendicular cross-section in which, among cell walls, those cell walls, which are continuously formed from the straight line 123 sandwiched between the straight lines 121 and 122 toward the one curve 124 are allowed to form straight lines (see 125a, 125b and the like in Fig. 3), and each of these straight lines 125 makes an angle from 55 to 90° relative to a tangent (see 126a, 126b and the like in Fig. 3) at an intersection with the one curve 124. Here, this angle is also desirably set as closely to 90° as possible.

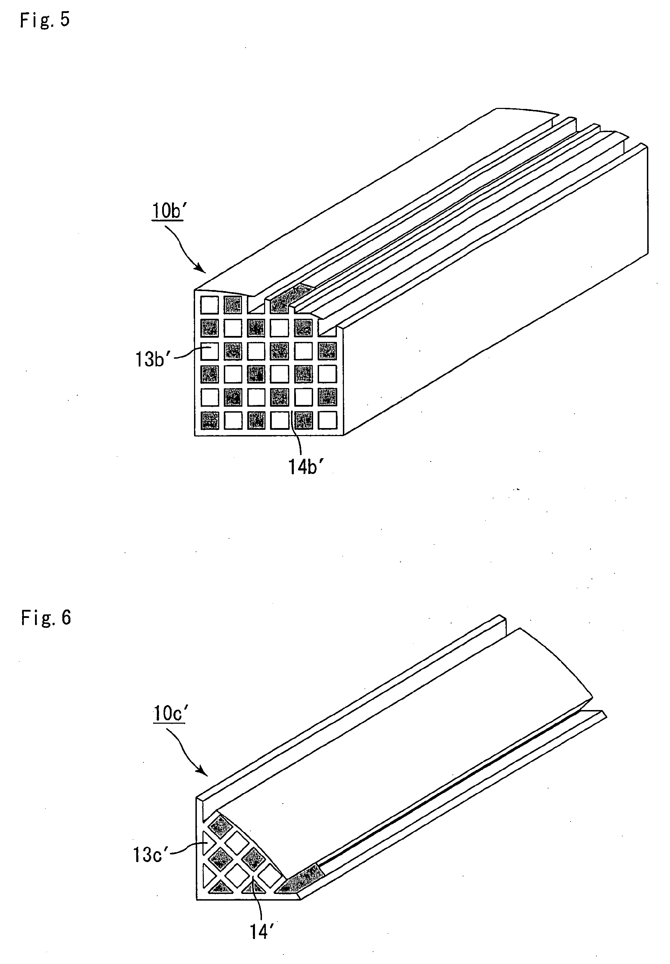

Moreover, the honeycomb structural ceramic members 10b and 10c shown in Figs. 3 and 4 have shapes in which curved portions are formed by the cell walls.
However, the honeycomb structural ceramic members constituting the honeycomb structured body are not limited to those members in which curved portions are formed by the cell walls, and may be prepared as honeycomb structural ceramic members shown in Figs. 5 and 6.
Figs. 5 and 6 are schematic perspective views that show other examples of honeycomb structural ceramic members that constitute a honeycomb structured body in accordance with the present invention.

A honeycomb structural ceramic member 10b' shown in Fig. 5 is another example of a honeycomb structural ceramic member having a shape at the perpendicular cross-section surrounded by three straight lines and one curve.
In this honeycomb structural ceramic member 10b', at a portion which forms the one curve on the shape at the perpendicular cross-section (upper face in the figure), portions of the cells located near the curved face are open to the outside. Such a honeycomb structural ceramic member 10b' can be formed by subjecting one portion of a rectangular pillar-shaped honeycomb structural ceramic member 10a, shown in Fig. 2, to a cutting process.
Here, one curve in the shape at the perpendicular cross-section of the honeycomb structural ceramic member 10b' refers to a curve corresponding to the portion that is subjected to the cutting process.
In Fig. 5, reference numeral 13b' indicates a cell, and reference numeral 14b' indicates a cell wall.

A honeycomb structural ceramic member 10c' shown in Fig. 6 is another example of a honeycomb structural ceramic member having a shape at the perpendicular cross-section surrounded by two straight lines and one curve.
In the same manner as the honeycomb structural ceramic member 10b' shown in Fig. 5, in this honeycomb structural ceramic member 10c' , at a portion which forms the one curve on the shape at the perpendicular cross-section, portions of the cells located near the curved face are open to the outside. Such a honeycomb structural ceramic member can also be formed by subjecting one portion of a rectangular pillar-shaped honeycomb ceramic member to a cutting process.
Here, one curve on the shape at the perpendicular cross-section of the honeycomb structural ceramic member 10c' also refers to a curve corresponding to the portion that is subjected to the cutting process.

In the first aspect of the present invention, the area of the shape at the perpendicular cross-section of each of honeycomb structural ceramic members constituting a honeycomb structured body is preferably set to 25 cm² or less. Moreover, the above-mentioned cross-sectional area is preferably set to 1 cm² or more.
In the case when the area is set to 25 cm² or less, since the cross-sectional area is small, a temperature difference hardly occurs between the center portion of the ceramic member and the circumferential portion thereof even upon a temperature rise or the like; thus, a thermal stress tends not to become so high, making it possible to prevent the occurrence of cracks and the like.

The honeycomb structured body of the first aspect of the present invention is mainly made of porous ceramics, and with respect to the material, examples thereof include: nitride ceramics suchas aluminum nitride, siliconnitride, boronnitride and titanium nitride; carbide ceramics such as silicon carbide, zirconium carbide, titanium carbide, tantalum carbide and tungsten carbide; and oxide ceramics such as alumina, zirconia, cordierite, mullite and silica. Here, the honeycomb structured body may be formed by using materials of two or more kinds, such as a composite body between silicon and silicon carbide, and aluminum titanate.
With respect to the material of the porous ceramic material, a silicon carbide based ceramic that is superior in heat resistance and mechanical characteristics, and has a high thermal conductivity, is more desirably used. Here, the silicon carbide based ceramic refers to a material having a silicon carbide content of 60% by weight or more.

Although the particle diameter of the ceramic used in the production of a honeycomb structured body is not particularly limited, those which are less susceptible to shrinkage in the succeeding firing process are more desirably used, and for example, those powders, prepared by combining 100 parts by weight of powders having an average particle diameter in a range of about 0. 3 to 50 µm with 5 to 65 parts by weight of powders having an average particle diameter in a range of about 0.1 to 1.0 µm, are more desirably used.

The plug and the cell wall that constitute the above-mentioned honeycomb structural ceramic member are desirably made from the same porous ceramic material. With this arrangement, the contact strength between the two members is increased, and by adjusting the porosity of the plug in the same manner as the cell walls, the coefficient of thermal expansion of the cell walls and the coefficient of thermal expansion of the plug are properly adjusted, so that it becomes possible to prevent a gap from being generated between the plug and the cell walls and cracks from generating in the plug and at portions of the cell walls that are made in contact with the plug, both gap and cracks due to a thermal stress upon manufacturing and in use of the ceramic member.

In addition to the ceramic material, the above-mentioned plug may contain metal and the like so as to adjust its thermal capacity.
With respect to the metal, examples thereof are not particularly limited and include iron, aluminum and metal silicon (Si). Each of these may be used alone, or two or more kinds of these may be used in combination.

With respect to the thickness of the plug, although not particularly limited, in the case where the plug is made from porous silicon carbide, the lower limit value thereof is desirably set to 1 mm, more desirably 3 mm, while the upper limit value thereof is desirably set to 40 mm, more desirably 20 mm.

With respect to the thickness of the cell wall, although not particularly limited, the lower limit value is preferably set to 0.1 mm, and the upper limit value is preferably set to 1.2 mm. The thickness of less than 0.1 mm tends to make the isostatic strength of the honeycomb structured body insufficient; in contrast, the thickness exceeding 1.2 mm tends to cause a high pressure loss.
Moreover, in the honeycomb structured body in accordance with the first aspect of the present invention, with respect to only the honeycomb structural ceramic member having a shape at the perpendicular cross-section surrounded by two straight lines and one curve, the thickness of the cell walls is preferably made thicker. In this case, the thickness of the cell walls is preferably set in a range of 0.15 to 1.3 mm.

In the honeycomb structured body of the present invention, the sealingmaterial layer (adhesive layer) 11 is formed between the honeycomb structural ceramic members 10a to 10c, and serves as a bonding agent that bonds a plurality of honeycomb structural ceramic members to one another, and the sealing material layer (adhesive layer) may also have a function for preventing exhaust gases from leaking.
Here, in addition to the function for achieving the above-mentionedeffects, the sealingmaterial layer (coat layer) 12 is formed on the peripheral portion of the honeycomb structured body, and also functions as the plug which, when the honeycomb structuredbody is placed in an exhaust-gas passage of an internal combustion engine, is used for preventing exhaust gases passing through the cells from leaking through the peripheral portion of the honeycomb structured body.
Here, in the honeycomb structural ceramic members, the sealing material layer 11 and the sealing material layer 12 may be made from the same material, or may be made from different materials. When the sealing material layer 11 and the sealing material layer 12 are made from the same material, the compounding ratio of the material may be the same or different.

Here, the sealing material layers 11 and 12 may be made from a dense material, or may be made from a porous material so as to allow exhaust gases to flow therein.
With respect to the thickness of the sealing material layer 11, the minimumvalue is preferably set to 0.1 mm, more preferably, to 0.2 mm. Moreover, the maximum value of the thickness of the sealing material layer 11 is preferably set to 10 mm, more preferably, to 3 mm.
Moreover, with respect to the thickness of the sealing material layer 12, the minimum value is preferably set to 0.1 mm, and the maximum value of the thickness of the sealing material layer 12 is preferably set to 10 mm, more preferably, to 4 mm.

With respect to the material used for forming the sealing material layer 11 and the sealing material layer 12, although not particularly limited, for example, a material, made from inorganic fibers and/or inorganic particles in addition to an inorganic binder and an organic binder, may be used.

With respect to the above-mentioned inorganic binder, for example, silica sol, alumina sol and the like may be used. Each of these materials may be used alone, or two or more kinds of these may be used in combination. Of the above-mentioned inorganic binders, silica sol is more desirably used.

With respect to the organic binder, examples thereof include polyvinyl alcohol, methyl cellulose, ethyl cellulose, carboxymethyl cellulose and the like. Each of these may be used alone or two or more kinds of these may be used in combination. Among the organic binders, carboxymethyl cellulose is more desirably used.

With respect to the inorganic fibers, examples thereof include ceramic fibers such as silica-alumina, mullite, alumina and silica. Each of these may be used alone, or two or more kinds of these may be used in combination. Among the inorganic fibers, silica-alumina fibers are more desirably used.

With respect to the inorganic particles, for example, carbides, nitrides and the like maybe used, and more specifically, inorganic powder, made from silicon carbide, silicon nitride, boron nitride and the like, or whisker and the like may be used. Each of these may be used alone, or two or more kinds of these maybe used in combination. Among the above-mentioned inorganic particles, silicon carbide, which is superior in thermal conductivity, is more desirably used.
Moreover, balloons that are fine hollow spheres composed of oxide-based ceramics, a pore-forming agent such as spherical acrylic particles and graphite, may be added to a paste for the above-mentioned sealing material layer, if necessary.
With respect to the above-mentioned balloons, although not particularly limited, for example, alumina balloons, glass micro-balloons, shirasu balloons, fly ash balloons (FAballoons) , mullite balloons and the like may be used. Among these, alumina balloons are more desirably used.

With respect to the porosity of the honeycomb structured body, although not particularly limited, the lower limit value is preferably set to 20%, and the upper limit value is preferably set to 80%. The porosity of less than 20% tends to quickly cause clogging in the honeycomb structured body 10; in contrast, the porosity exceeding 80% tends to cause a reduction in the isostatic strength of the honeycomb structured body 10, with the result that it might be easily damaged.
The above-mentioned porosity can be measured through known methods such as a mercury injection method, Archimedes method, and a measuring method using a scanning electron microscope (SEM).

The lower limit value of the average pore diameter of the honeycomb structured body is desirably set to 1 µm, and the upper limit value is desirably set to 100 µm. The average pore diameter of less than 1 µm tends to cause clogging easily. In contrast, the average pore diameter exceeding 100 µm allows particulates to easily pass through the pores, so that the particulates are not captured and the honeycomb structured body fails to function as a filter.

The honeycomb structured body 100 shown in Fig. 1 has a round shape on its shape at the perpendicular cross-section; however, the shape at the perpendicular cross-section of the honeycomb structured body of the first aspect of the present invention is not particularly limited.
The shape at the perpendicular cross-section of the honeycomb structured body is preferably set to a shape surrounded by only a curve or a curve and a straight line, and as for shapes other than the round shape, specific examples thereof include an elliptical shape, an elongated round shape (race track shape), and a shape (concave shape) in which one portion of a simple closed curve such as an elliptical shape and an elongated round shape has a concave portion.

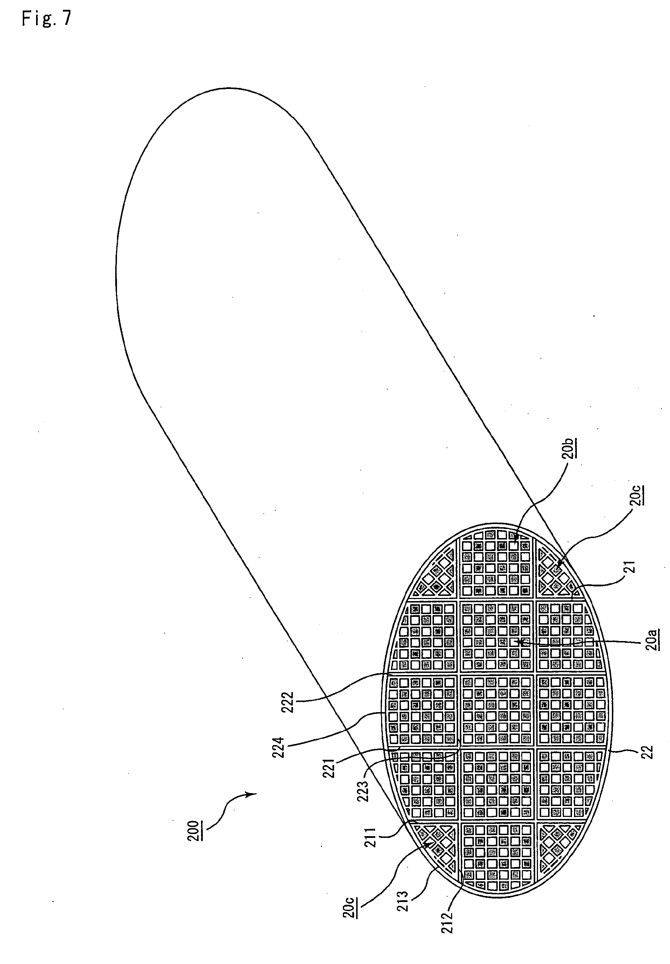

Fig. 7 is a perspective view that schematically shows another example of the honeycomb structured body of the first aspect of the present invention.
The shape at the perpendicular cross-section of a honeycomb structured body 200 shown in Fig. 7 has an elongated round shape (racetrack shape).
The honeycomb structured body 200 has a structure in which fifteen pieces of honeycomb structural ceramic members 20a to 20c are combined with one another by interposing sealingmaterial layers (adhesive layers) 21 with a sealing material layer (coat layer) 22 formed on its periphery.
With respect to the honeycomb structural ceramic members, three pieces of honeycomb structural ceramic members 20a each having a tetragonal profile on a shape at the perpendicular cross-section, eight pieces of honeycomb structural ceramic members 20b each of which has a shape at the perpendicular cross-section surrounded by three straight lines and one curve, and four pieces of honeycomb structural ceramic members 20c each of which has a shape at the perpendicular cross-section surrounded by two straight lines and one curve are used. Here, the structure of each of the honeycomb structural ceramic members is the same as those of the honeycomb structural ceramic members 10a to 10c shown in Figs. 2 to 4, except that the shape at the perpendicular cross-section is different.

Also, in the honeycomb structured body 200, the honeycomb structural ceramic member 20c, which has a shape at the perpendicular cross-section surrounded by two straight lines and one curve, has a structure on its shape at the perpendicular cross-section in which, among cell walls, those cell walls, which are continuously formed from the peripheral portion of the honeycomb structured body toward the inside of the honeycomb structured body, and correspond to cell walls that are continuously formed from the curve 213 toward either one of the two straight lines 211 and 212, are allowed to form a straight line, and this straight line makes an angle from 55 to 90° relative to a tangent at an intersection with the one curve.
Furthermore, the honeycomb structural ceramic member 20b, which has a shape at the perpendicular cross-section surrounded by three straight lines and one curve, has a structure on its shape at the perpendicular cross-section in which, among cell walls, those cell walls, which are continuously formed from the one curve 224 toward the straight line 223 sandwiched between two straight lines 221 and 222 are allowed to form straight lines, and each of these straight lines makes an angle from 55 to 90° relative to a tangent at an intersection with a one curve 224.

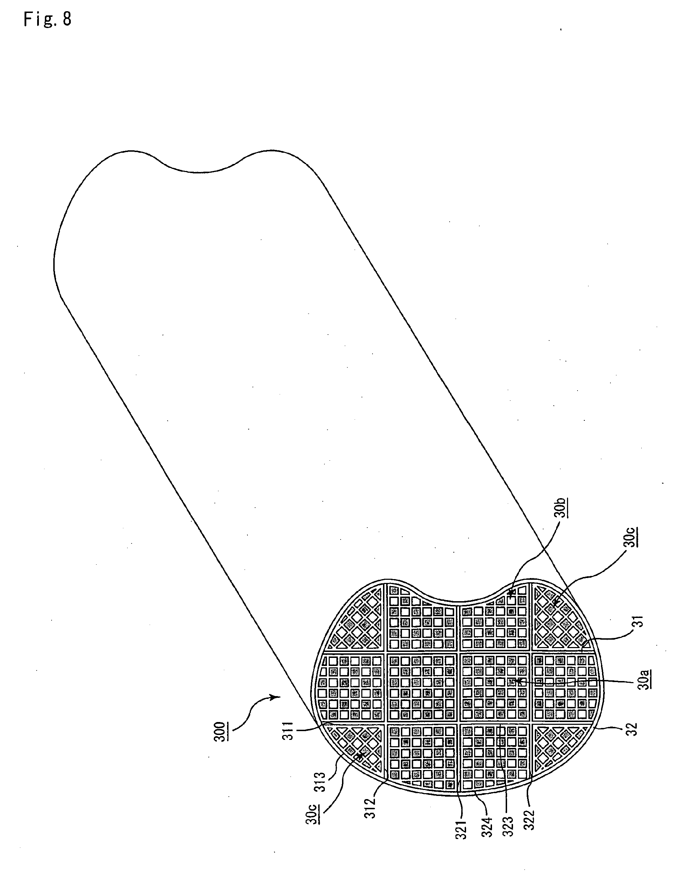

Fig. 8 is a perspective view that schematically shows another example of the honeycomb structured body of the first aspect of the present invention.
The shape at the perpendicular cross-section of a honeycomb structured body 300 shown in Fig. 8 is a simple closed curve having a partly concaved shape (a concave shape).
The honeycomb structured body 300 has a structure in which twelve pieces of honeycomb structural ceramic members 30a to 30c are combined with one another by interposing sealing material layers (adhesive layers) 31, with a sealing material layer (coat layer) 32 formed on its periphery.
With respect to the honeycomb structural ceramic members, two pieces of honeycomb structural ceramic members 30a each having a tetragonal profile on the shape at the perpendicular cross-section, six pieces of honeycomb structural ceramic members 30b each of which has a shape at the perpendicular cross-section surrounded by three straight lines and one curve, and four pieces of honeycomb structural ceramic members 30c each of which has a shape at the perpendicular cross-section surrounded by two straight lines and one curve are used. Here, the structure of each of the honeycomb structural ceramic members is the same as those of the honeycomb structural ceramic members 10a to 10c shown in Figs. 2 to 4, except that the shape at the perpendicular cross-section is different.

Also, in the honeycomb structured body 300, the honeycomb structural ceramic member 30c, which has a shape at the perpendicular cross-section surrounded by two straight lines and one curve, has a structure on its shape at the perpendicular cross-section in which, among cell walls, those cell walls that are continuously formed from the curve 313 toward either one of the two straight lines 311 and 312, are allowed to form a straight line, and this straight line makes an angle from 55 to 90° relative to a tangent at an intersection with the one curve.
Furthermore, the honeycomb structural ceramic member 30b, which has a shape at the perpendicular cross-section surrounded by three straight lines and one curve, has a structure on its shape at the perpendicular cross-section in which, among cell walls, those cell walls, which are continuously formed from the one curve 324 toward the straight line 323 sandwiched between the two straight lines 321 and 322 are allowed to form straight lines, and each of these straight lines makes an angle from 55 to 90° relative to a tangent at an intersection with the one curve 324.

Moreover, a catalyst, which can assist burning of PM (particulate matters) and convert CO, HC and NOx in exhaust gases, may be supported on the honeycomb structured body in accordance with the first aspect of the present invention.
The honeycomb structured body, with such a catalyst supported thereon, is allowed to function as a filter used for capturing particulates in exhaust gases and also serve as a catalyst converter used for purifying CO, HC and NOx contained in exhaust gases.

Examples of the catalyst which is supported on the honeycomb structured body include noble metals such as platinum, palladium and rhodium, and the like, although not limited thereto as long as it can convert CO, HC, NOx and the like in exhaust gases. Among these, a so-called three-way catalyst comprising platinum, palladium and rhodium is desirably used. Also, a catalyst comprising, in addition to the noble metals, an element such as an alkali metal (Group 1 in Element Periodic Table), an alkali earth metal (Group 2 in Element Periodic Table), a rare-earth element (Group 3 in Element Periodic Table) and a transition metal element, may be supported.

The above-mentioned catalyst may be supported on the surfaces of particles constituting the honeycomb structuredbody, or may be formed on the cell walls with a certain thickness. Moreover, the catalyst may be evenly supported on the surfaces of the cell walls and/or the surfaces of particles, or may be supported on a specific place in a biased manner.

Moreover, in the case when the catalyst is adhered to the honeycomb structured body, preferably, after preliminarily coating the surface thereof with a support material such as alumina, the catalyst is adhered thereto. With this arrangement, the specific surface area is made larger and the dispersing property of the catalyst is improved so that the reaction sites for the catalyst can be increased. Moreover, since the support material makes it possible to prevent the catalyst metal from sintering, the heat resistant property of the catalyst can also be improved.

Here, the honeycomb structured body of the present invention with the catalyst supported thereon is allowed to function as a gas purifying device in the same manner as a conventionally known DPF (Diesel Particulate Filter) with catalyst. Therefore, detailed description of the honeycomb structured body of the first aspect of the present invention that is also allowed to function as a catalyst supporting carrier is omitted here.

The following description will discuss one example of a manufacturing method of the honeycomb structured body of the first aspect of the present invention.
First, a manufacturing method of a honeycomb structured body that is constituted by a plurality of honeycomb structural ceramic members combined with one another will be explained.
First, an extrusion-molding process is carried out by using a material paste mainly composed of the aforementioned ceramic material so that a tetragonal pillar-shaped ceramic molded body isprepared. Here, the shapes of cell walls are properly designed so that the cell walls of the manufactured honeycomb structured body have predetermined shapes.

With respect to the material paste, although not particularly limited, such a material paste as to set the porosity of the manufactured honeycomb structured body to a range of 20 to 80% is preferably used, and for example, a material paste formed by adding a binder, a dispersant solution and the like to powder made from the above-mentioned ceramic material may be used.

With respect to the ceramic powder, not particularly limited, examples of the powder include: oxide ceramics such as cordierite, alumina, silica and mullite; carbide ceramics such as silicon carbide, zirconium carbide, titanium carbide, tantalum carbide and tungsten carbide; and nitride ceramics such as aluminumnitride, silicon nitride, boron nitride and titanium nitride; a composite material of silicon carbide and silicon; and aluminum titanate, and among these, silicon carbide, which has high heat resistance, is superior in mechanical characteristics and also has high heat conductivity, is preferably used.

With respect to the particle diameter of the ceramic powder, although not particularly limited, those which are less susceptible to shrinkage in the succeeding firing process are desirably used, and for example, those powders, prepared by combining 100 parts by weight of powders having an average particle diameter in a range of about 0.3 to 50 µm with 5 to 65 parts by weight of powders having an average particle diameter in a range of about 0.1 to 1.0 µm, are preferably used.

With respect to the above-mentioned binder, although not particularly limited, examples thereof include: methyl cellulose, carboxymethyl cellulose, hydroxyethyl cellulose, polyethylene glycol, phenolic resin, epoxy resin and the like.
In general, the compounding amount of the above-mentioned binder is desirably set to about 1 to 10 parts by weight with respect to 100 parts by weight of the ceramic powder.

With respect to the dispersant solution, not particularly limited, examples thereof include an organic solvent such as benzene; alcohol such as methanol; water, and the like.
An appropriate amount of the above-mentioned dispersant solution is mixed therein so that the viscosity of the material paste is set within a fixed range.

These ceramic powder, binder and dispersant solution are mixed by an attritor or the like, and sufficiently kneaded by a kneader or the like, and then extrusion-molded.

Moreover, a molding auxiliary may be added to the material paste, if necessary.
With respect to the molding auxiliary, although not particularly limited, examples thereof include ethylene glycol, dextrin, fatty acid soap, polyalcohol, fatty acid and the like.

Moreover, balloons that are fine hollow spheres composed of oxide-based ceramics, and a pore-forming agent such as spherical acrylic particles and graphite, may be added to the above-mentioned material paste, if necessary.
With respect to the above-mentioned balloons, not particularly limited, for example, alumina balloons, glass micro-balloons, shirasu balloons, fly ash balloons (FA balloons) , mullite balloons and the like may be used. Among these, alumina balloons are more desirably used.

Next, the above-mentioned ceramic molded body is dried by using a drier such as a microwave drier, a hot-air drier, a dielectric drier, a reduced-pressure drier, a vacuum drier and a freeze drier so that a ceramic dried body is formed. Thereafter, a predetermined amount of plug material paste, which forms plugs, is injected into the end portion on the outlet side of the inlet-side group of cells and the end portion on the inlet side of the outlet-side group of cells so that the cells are sealed.

With respect to the plug material paste, although not particularly limited, such paste as to set the porosity of a plug produced through the succeeding processes to 20 to 80% is desirably used, and for example, the same paste as the above-mentioned material paste may be used.

Next, the ceramic dried body filled with the plug material paste is subjected to degreasing and firing processes under predetermined conditions so that a honeycomb structural ceramic member, made from porous ceramics and constituted by a single sintered body as a whole, is manufactured.
Here, with respect to the degreasing and firing conditions of the ceramic dried body, it is possible to apply conditions that have been conventionally used for manufacturing a filter made from porous ceramics.

Moreover, the average pore diameter of the honeycomb structural ceramic member is desirably set in a range of 1 to 40 µm.

When a catalyst is supported on the honeycomb structural ceramic member, it is desirable that an alumina film with a large specific surface area is formed on the surface of the ceramic fired body obtained by firing, so that a catalyst such as a co-catalyst and platinum is adhered to the surface of this alumina film.

With respect to the method for forming an alumina film on the surface of a ceramic fired body, for example, a method in which a ceramic fired body is impregnated with a solution of a metal compound containing aluminum such as Al(NO₃)₃ and then heated, a method in which a ceramic fired body is impregnated with a solution containing alumina powder and then heated, may be proposed.
With respect to the method for adhering a co-catalyst to the alumina film, for example, a method in which a ceramic fired body is impregnated with, for example, a solution of a metal compound containing an rare-earth element such as Ce (NO₃)₃ and then heated, may be proposed.
With respect to the method for adhering a catalyst to the alumina film, for example, a method in which a ceramic fired body is impregnated with, for example, a solution of diammine dinitro platinum nitric acid ([Pt (NH₃)₂(NO₂)₂] HNO₃; platinum concentration: 4.53%by weight) and then heated, maybeproposed.

Next, a sealing material paste for a sealing material layer is applied to each of the side faces of the honeycomb structural ceramic member with an even thickness to form a sealing material paste layer, and by repeating a process for successively laminating another prescribed honeycomb structural ceramic member on this sealing material paste layer, a honeycomb structural ceramic member aggregatedbody having a predetermined size is manufactured.
With respect to the material for forming the sealing material paste, since it has already been explained, the explanation thereof is omitted.

Next, the honeycomb structural ceramic member aggregated body is heated so that the sealing material paste layer is dried and solidified to form a sealing material layer.
After that, the honeycomb structural ceramic member aggregated body in which a plurality of the honeycomb structural ceramic members are bonded to one another by interposing the sealing material layers is subjected to a cutting process by using a diamond cutter and the like to be made into a prescribed shape (for example, a cylindrical shape as shown in Fig. 1).

By forming a sealing material layer with the sealing material paste on the outer periphery of the honeycomb structural ceramic member aggregated body that has been subjected to the cutting process, the honeycomb structured body of the first aspect of the present invention can be manufactured.

The manufacturing method that has been explained above relates to a method in which after tetragonal pillar-shaped honeycomb structural ceramic members in the number required have been produced, the honeycomb structural ceramic members are combined with one another by interposing sealing material layers, and this is then subjected to cutting processes to manufacture the honeycomb structured body of the first aspect of the present invention; however, in the case when the honeycomb structured body of the first aspect of the present invention is manufactured, during the extrusion-molding process of the material paste, ceramic molded bodies, which have predetermined shapes corresponding to layout positions, that is, ceramic molded bodies (see Fig. 2) each having a tetragonal pillar-shape appearance on the shape at the perpendicular cross-section, ceramic molded bodies (see Fig. 3) each having a shape at the perpendicular cross-section surrounded by three straight lines and one curve and ceramic molded bodies (see Fig. 4) each having a shape at the perpendicular cross-section surroundedby two straight lines and one curve, are produced, and these are subjected to predetermined processes, such as drying, firing and catalyst-adhering processes, and then combined with one another by interposing sealing material layers, and lastly, a sealing material layer is formed on the peripheral portion so that the honeycomb structured body of the first aspect of the present invention may be manufactured.
In this case, the cutting processes described in the aforementioned manufacturing method can be omitted.

Although the use of the honeycomb structured body of the first aspect of the present invention is not particularly limited, it is desirably applied to an exhaust gas purifying device for a vehicle.

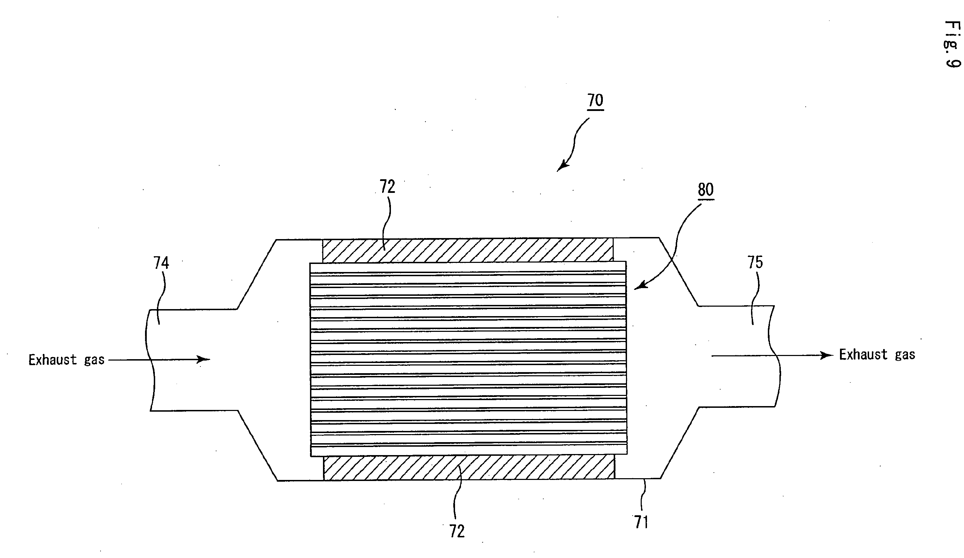

Fig. 9 is a cross-sectional view that schematically shows one example of an exhaust gas purifying device for a vehicle in which the honeycomb structured body of the present invention is installed.

As shown in Fig. 9, an exhaust gas purifying device 70 is mainly constituted by a honeycomb structured body 80, a casing 71 that covers the periphery of the honeycomb structured body 10, and a holding sealing material 72 that is placed between the honeycomb structured body 80 and the casing 71; and connected to one end of the casing 71 on the exhaust gas inlet side is an introducing pipe 74, which is connected to an internal combustion system such as an engine, and connected to the other end of the casing 71 is an exhaust pipe 75 connected to the outside. Moreover, the arrows in Fig. 9 show flows of exhaust gases.
Furthermore, in Fig. 9, the honeycomb structured body 80 may be the honeycomb structured body 100 shown in Fig. 1 or the honeycomb structured body 200 or 300 shown in Figs. 7 and 8. In these cases, however, the casings need to be formed into shapes which fit the shapes of the respective honeycomb structured bodies.

In the exhaust gas purifying device 70 having the above-mentioned configuration, exhaust gases discharged from the internal combustion system such as an engine, are directed into the casing 71 through the introducing pipe 74, and allowed to flow into the honeycomb structured body from inlet-side cells; after having passed through the cell walls where particulates are captured and being purified thereby, the exhaust gases are discharged out of the honeycomb structured body from outlet-side cells, and then discharged to the outside through the exhaust pipe 75.

In the exhaust-gas purifying device 70, after a large quantity of particulates have been accumulated on the cell walls of the honeycomb structured body to cause an increase in pressure loss, the honeycomb structured body is subjected to a regenerating process.
In the regenerating process, gases, heated by using a heating means, not shown, are allowed to flow into the cells of the honeycomb structuredbody so that the honeycomb structured body is heated to burn and eliminate the particulates accumulated on the cell walls. Moreover, the particulates may be burned and eliminated by using a post-injection system.

Next, the honeycomb structured body of the second aspect of the present invention will be explained below.
The honeycomb structured body in accordance with the second aspect of the present invention is a honeycomb structured body in which a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween, wherein a sealingmaterial layer is formed on a peripheral portion of the honeycomb structured body; at least one honeycomb structural ceramic member having a tetragonal profile on the cross-section perpendicular to the longitudinal direction, at least one honeycomb structural ceramic member having a shape surrounded by three straight lines and one curve on the cross-section perpendicular to the longitudinal direction, and at least one honeycomb structural ceramic member having a shape surrounded by two straight lines and one curve on the cross-section perpendicular to the longitudinal direction, are included as the honeycomb structural ceramic members; and on the cross-section perpendicular to the longitudinal direction in the honeycomb structural ceramic member having the shape surrounded by two straight lines and one curve on the cross-section perpendicular to the longitudinal direction, among cell walls, each of the cell walls that are continuously formed from the peripheral side of the honeycomb structured body toward the inside of the honeycomb structured body and are continuously formed from the one curve toward either one of the two straight lines is allowed to form a straight line, where the straight line makes an angle from 70° to 90° relative to a tangent at the middle point of the one curve.

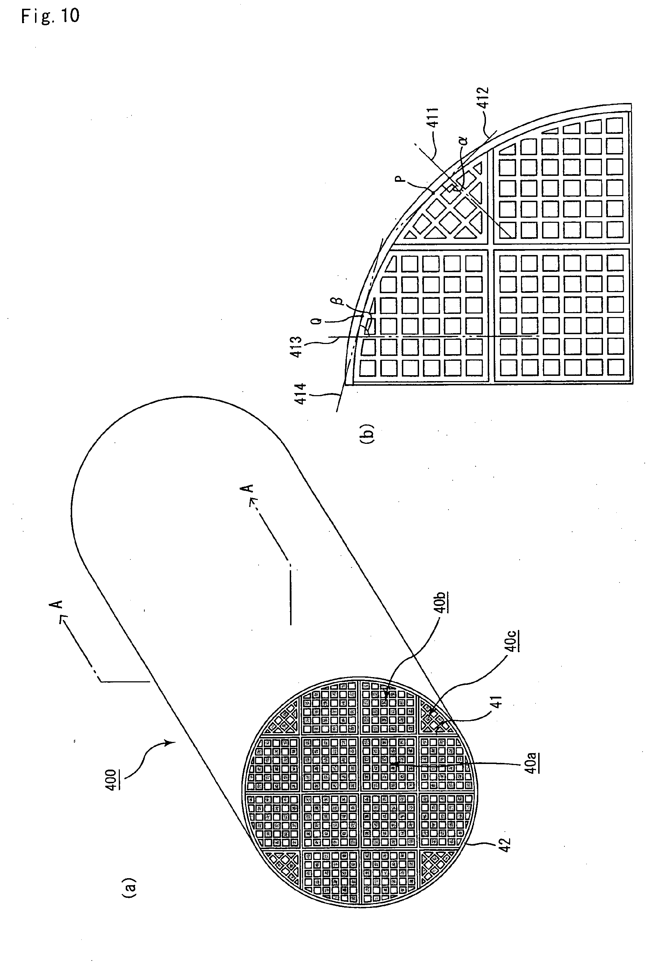

The following description will discuss the honeycomb structured body of the second aspect of the present invention with reference to Fig. 10.
Fig. 10 (a) is a perspective view that schematically shows one example of a honeycomb structured body of the second aspect of the present invention, and Fig. 10 (b) is a cross-sectional view taken along line A-A of the honeycomb structured body shown in Fig. 10(a). Here, the configuration of the honeycomb structured body 400 as shown in Fig. 10 is almost the same as that of honeycomb structured body 100 as shown in Fig. 1.

In the honeycomb structured body 400 shown in Fig. 10, sixteen pieces of the honeycomb structural ceramic members 40a to 40c are combined with one after another by interposing sealing material layers (adhesive layers) 41, and a sealing material layer (coat layer) 42 formedon the periphery thereof. By forming sealing material layers in this manner, it is possible to prevent cracks from occurring in the cell walls.
With respect to the honeycomb structural ceramic members, four pieces of honeycomb structural ceramic members 40a each having a tetragonal profile on the shape at the perpendicular cross-section, eight pieces of honeycomb structural ceramic members 40b each of which has a shape at the perpendicular cross-section surrounded by three straight lines and one curve, and four pieces of honeycomb structural ceramic members 40c each of which has a shape at the perpendicular cross-section surrounded by two straight lines and one curve are used.
Here, each of the honeycomb structural ceramic members 40a to 40c are the same as each of the honeycomb structural ceramic members 10a to 10c which constitute the honeycomb structured body 100, respectively.

Among the honeycomb structural ceramic members constituting the honeycomb structured body 400, in a honeycomb structural ceramic member 40c having a shape at the perpendicular cross-section surrounded by two straight lines and one curve, as shown in Fig. 10(b), with respect to cell walls that are continuously formed from the peripheral side of the honeycomb structured body toward the inside of the honeycomb structured body, each of the cell walls continuously formed from the one curve toward either one of the two straight lines forms a straight line (see reference numeral 411 in the figure), and an angle α between this straight line 411 and a tangent (see reference numeral 412 in the figure) at the middle point P of the one curve is 90°. The honeycomb structured body 400 is thus designed so that the angle between the straight line 411 and the tangent 412 at the middle point of the curve is 90°; therefore, the honeycomb structured body is prepared to have a sufficient isostatic strength so that upon being housed in a casing, the honeycomb structured body is hardly damaged, and cracks hardly occur in the cell walls.

In the honeycomb structured body in accordance with the second aspect of the present invention, with respect to cell walls that are continuously formed from the peripheral side of the honeycomb structured body toward the inside of the honeycomb structured body, a straight line, formed by each of the cell walls continuously formed from the one curve toward either one of the two straight lines, makes an angle (see α in Fig. 10 (b)) in a range of 70 to 90° relative to a tangent at the middle point of the curve. When the angle is set within this range, the effects of the second aspect of the present invention can be properly obtained.
The angle between the straight line formed by each of the cell walls continuously formed from the one curve toward either one of the two straight lines and the tangent at the middle point of the curve is desirably set as closely to 90° as possible.

Moreover, in a honeycomb structural ceramic member having the shape surrounded by two straight lines and one curve, with respect to the honeycomb structural ceramic member as shown in Fig. 10(b), cell walls that are continuously formed from the peripheral portion of the honeycomb structured body toward the inside of the honeycomb structured body correspond to those cell walls that form straight lines descending leftward.

Furthermore, in a honeycomb structural ceramic member 40b having a shape at the perpendicular cross-section surrounded by three straight lines and one curve, as shown in Fig. 10 (b), each of cell walls that are continuously formed from the one curve toward the straight line sandwiched between the two straight lines forms a straight line (see reference numeral 413 in the figure), and an angle β between this straight line 413 and a tangent (see reference numeral 414 in the figure) at the middle point Q of the one curve is 76°.
In this manner, in the honeycomb structural ceramic member 40b that has the shape surrounded by three straight lines and one curve and forms the honeycomb structured body of the second aspect of the present invention, the straight line, formed by each of cell walls that are continuously formed from the one curve toward the straight line sandwiched between the two straight lines, desirably makes an angle in a range of 70 to 90° relative to a tangent at the middle point of the curve. In this case, cracks in the cell walls can be more surely prevented from being caused.

The honeycomb structured body 400 shown in Fig. 10 has a round shape on its shape at the perpendicular cross-section; however, the shape at the perpendicular cross-section of the honeycomb structured body of the second aspect of the present invention is not particularly limited.
The shape at the perpendicular cross-section of the honeycomb structured body of the second aspect of the present invention is preferably set to a shape surrounded by only a curve or a curve and a straight line, and as for shapes other than the round shape, specific examples thereof include an elliptical shape, an elongated round shape (race track shape), and a shape (concave shape) in which one portion of a simple closed curve such as an elliptical shape and an elongated round shape has a concave portion.

The constituent materials, the manufacturing method and the like for the honeycomb structured body of the second aspect of the present invention are the same as those for the honeycomb structured body of the first aspect of the present invention; therefore explanation thereof is omitted herein.
Also, the honeycomb structured body of the second aspect of the present invention is, as with the honeycomb structured body of the first aspect of the present invention, desirably used as a filter for an exhaust gas purifying device for a vehicle .

Next, the honeycomb structured body of the third aspect of the present invention will be explained below.
The honeycomb structured body in accordance with the third aspect of the present invention is a honeycomb structured body in which a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween, wherein at an outer position in the honeycomb structured body, a honeycomb structural ceramic member, having a peripheral edge surrounded by a straight line and a curve on the cross-section perpendicular to the longitudinal direction, is placed, at an inner position in the honeycomb structured body, a honeycomb structural ceramic member, having a peripheral edge surrounded by only straight lines on the cross-section perpendicular to the longitudinal direction, is placed, a sealing material layer is formed on a peripheral portion of the honeycomb structured body, and the honeycomb structured body comprises: a honeycomb structural ceramic member that has a structure in which cell walls continuously formed toward the straight line portion of the peripheral edge are allowed to form a straight line, where an angle between the straight line and the straight line portion of the peripheral edge is 90° and a honeycomb structural ceramic member that has a structure in which the angle is in the range of 25° to 65°, as the honeycomb structural ceramic member placed at the outer position in the honeycomb structured body; and a honeycomb structural ceramic member that has a structure in which cell walls continuously formed toward the straight line portion of the peripheral edge are allowed to form a straight line, where an angle between the straight line and the straight line portion of the peripheral edge is 90°, as the honeycomb structural ceramic member placed at the inner position in the honeycomb structured body.

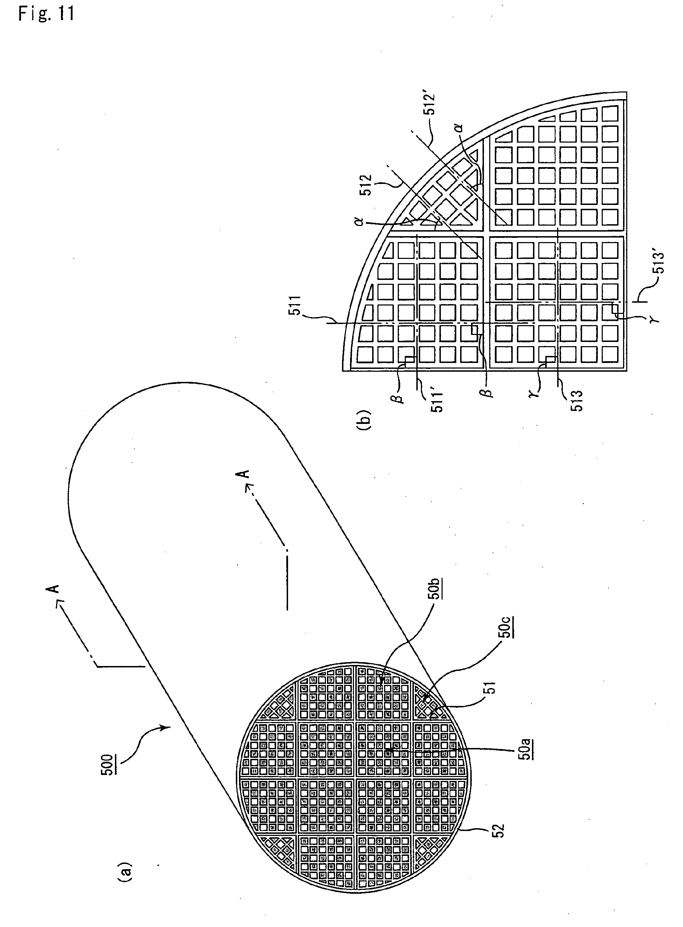

The following description will discuss the honeycomb structured body of the third aspect of the present invention with reference to Fig. 11.
Fig. 11 (a) is a perspective view that schematically shows one example of a honeycomb structured body of the third aspect of the present invention, and Fig. 11 (b) is a cross-sectional view taken along line A-A of the honeycomb structured body shown in Fig. 11(a). Here, the configuration of the honeycomb structured body 500 as shown in Fig. 11 is almost the same as that of honeycomb structured body 100 as shown in Fig. 1.

The honeycomb structured body 500 shown in Fig. 11 has a structure in which sixteen pieces of honeycomb structural ceramic members 50a to 50c are combined with one another by interposing sealing material layers (adhesive layers) 51, and a sealing material layer (coating layer) 52 formed on the periphery thereof. By forming sealing material layers in this manner, it is possible to prevent cracks from occurring in the cell walls.
Here, at an outer position in the honeycomb structured body 500, honeycomb structural ceramic members 50b and 50c, each having a peripheral edge with a shape surrounded by straight lines and a curve on its shape at the perpendicular cross-section are placed, and at an inner position in the honeycomb structured body 500, a honeycomb structural ceramic member 50a having a peripheral edge with a shape surrounded by only straight lines on its shape at the perpendicular cross-section is placed.

Here, in the honeycomb structured body in accordance with the third aspect of the present invention, the outer position in the honeycomb structured body refers to a position at which a honeycomb structural ceramic member is placed, where the surroundings thereof have a part with no other honeycomb structural ceramic member (for example, a position at which the honeycomb structural ceramic member 50b or 50c is placed in the figure), and the inner position in the honeycomb structured body refers to a position at which a honeycomb structural ceramic member is placed, where other honeycomb structural ceramic members are placed in the entire surroundings thereof (for example, a position at which the honeycomb structural ceramic member 50a is placed in the figure).

Moreover, with respect to the honeycomb structural ceramic members 50b and 50c, each having the peripheral edge with a shape at the perpendicular cross-section surrounded by straight lines and a curve, placed on the outside of the honeycomb structured body 500, the honeycomb structural ceramic member 50b has a structure in which cell walls continuously formed toward the straight line portion of the peripheral edge are allowed to form straight lines 511, 511' and the like, and an angle β between each of these straight lines 511 and the like and the straight line portion of the peripheral edge is 90°.
Moreover, the honeycomb structural ceramic member 50c has a structure in which cell walls continuously formed toward the straight line portion of the peripheral edge are allowed to form straight lines 512, 512' and the like, and an angle α between each of these straight lines 512 and the like and the straight line portion of the peripheral edge is 45°.

The honeycomb structural ceramic member 50a having the peripheral edge with a shape at the perpendicular cross-section surrounded by only straight lines, placed at the inner position in the honeycomb structured body, has a structure in which cell walls continuously formed toward the straight line portion of the peripheral edge are allowed to form straight lines 513 and 513', and an angle γ* between each of these straight lines 513 and the like and the straight line portion of the peripheral edge is 90°.

In the honeycomb structured body 500 of this type, since the honeycomb structural ceramic member 50c has a structure in which cell walls continuously formed toward the straight line portion of the peripheral edge are allowed to form straight lines 512, 512' and the like, and since an angle α, between each of these straight lines 512 and the like and the straight line portion of the peripheral edge is 45°, it is possible to prepare a honeycomb structured body having a sufficient isostatic strength so that upon being housed in a casing and used, the honeycomb structured body is hardly damaged, and cracks hardly occur in the cell walls.

In the honeycomb structured body in accordance with the third aspect of the present invention, a plurality of honeycomb structural ceramic members are placed at the outer position in the honeycomb structured body, and each of these has a structure in which cell walls continuously formed toward the straight line portion of the peripheral edge are allowed to form straight lines, with an angle between each of the straight lines and the straight line portion of the peripheral edge being 90° or in a range of 25 to 65°.
The angles made between these lines may be appropriately selected depending on the positions of the honeycomb structural ceramic members.

In other words, in the honeycomb structured body in accordance with the third aspect of the present invention, on the cross section perpendicular to the longitudinal direction, the honeycomb structural ceramic member 50c, which is located more closely to the respective vertexes of a hypothetical rectangle that inscribes the honeycomb structured body, and has sides parallel with respective sides of the honeycomb structural ceramic member 50a having the peripheral edge surrounded by only straight lines, preferably has the above-mentioned angle in a range of 25 to 65°, and each of the other honeycomb structural ceramic members 50a and 50b placed at the outer position in the honeycomb structured body preferably has the above-mentioned angle of 90°. With this structure, it is possible to achieve the above-mentioned effects more positively.
Here, since the honeycomb structured body 500 has a round profile at the shape at the perpendicular cross-section, the hypothetical rectangular shape, which inscribes the honeycomb structured body on the cross section perpendicular to the longitudinal direction, with respective sides being in parallel with respective sides of the honeycomb structural ceramic member 50a having the peripheral edge surroundedby only straight lines, is a square. Incidentally, a square is a shape included in rectangles.

Moreover, in the honeycomb structured body in accordance with the third aspect of the present invention, the honeycomb structural ceramic member that is located most closely to the respective vertexes of the hypothetical rectangular shape (with distances to the respective vertexes beingmade shortest) refers to a honeycomb structural ceramic member that includes intersections between the diagonals of the rectangular shape and the periphery of the honeycomb structured body.

Moreover, with respect to the honeycomb structural ceramic member that is placed at the outer position in the honeycomb structured body, and has the structure in which cell walls continuously formed toward the straight line portion of the peripheral edge are allowed to form straight lines, with an angle between each of the straight lines and the straight line portion of the peripheral edge in a range of 25 to 65°, the above-mentioned angle is desirably set as closely to 45° as possible in the case when the shape at the perpendicular cross-section of the honeycomb structured body is a round shape.

The honeycomb structured body 500 shown in Fig. 11 has a round shape in its shape at the perpendicular cross-section; however, the shape at the perpendicular cross-section of the honeycomb structured body of the third aspect of the present invention is not particularly limited.
The shape at the perpendicular cross-section of the honeycomb structured body of the third aspect of the present invention is preferably set to a shape surrounded by only a curve or a curve and a straight line, and as for shapes other than the round shape, specific examples thereof include an elliptical shape, an elongated round shape (race track shape), and a shape (concave shape) in which one portion of a simple closed curve such as an elliptical shape and an elongated round shape has a concave portion.

For this reason, in the honeycomb structured body 500 as shown in Fig. 11, the honeycomb structural ceramic members 50b and 50c placed at the outer position in the honeycomb structured body 500 are honeycomb structural ceramic members, each having a peripheral edge with a shape at the perpendicular cross-section surrounded by straight lines and a curve; however, in the honeycomb structured body in accordance with the third aspect of the present invention, with respect to the honeycomb structural ceramic members placed at the outer position in the honeycomb structured body, in addition to the honeycomb structural ceramic members, each having a peripheral edge with a shape at the perpendicular cross-section surrounded by straight lines and a curve, honeycomb structural ceramic members, each having a shape at the perpendicular cross-section surrounded by only straight lines, may be placed.

The constituent materials, the manufacturing method and the like for the honeycomb structured body of the third aspect of the present invention are the same as those for the honeycomb structured body of the first aspect of the present invention; therefore, explanation thereof is omitted herein.
Also, the honeycomb structured body of the third aspect of the present invention is, as with the honeycomb structured body of the first aspect of the present invention, desirably used as a filter for an exhaust gas purifying device of a vehicle.

### EXAMPLES

### (Example 1)

Powder of α-type silicon carbide having an average particle diameter of 22 µm (7000 parts by weight) and powder of α-type silicon carbide having an average particle diameter of 0.5 µm (3000 parts by weight) were wet-mixed, and to 10000 parts by weight of the resulting mixture were added and kneaded 570 parts by weight of an organic binder (methyl cellulose) and 1770 parts by weight of water to prepare a mixed composition.
Next, to the above-mentioned mixed composition were added 330 parts by weight of a plasticizer (UNILUB, made by NOF Corp.) and 150 parts by weight of a lubricant (glycerin) , and this was further kneaded, and then extrusion-molded to manufacture a rectangular pillar-shaped raw molded body (see Fig. 2 (a)) which has cells each of which has a tetragonal shape on the shape at the perpendicular cross-section and is surrounded by cell walls that are in parallel with the peripheral edges, and a rectangular pillar shaped raw molded body which has cells each of which has a tetragonal shape on the shape at the perpendicular cross-section and is surrounded by cell walls, each making an angle of 45° with respect to the peripheral edge.

Next, the above-mentioned raw molded bodies were dried by using a micro-wave dryer or the like to prepare ceramic dried bodies, and predetermined cells were then filled with a plug material paste having the same composition as the raw molded body.
Next, after these had been again dried by using a dryer, the resulting products were degreased at 400°C, and fired at 2200°C in a normal-pressure argon atmosphere for 3 hours to manufacture honeycomb structural ceramic members, each of which was a silicon carbide sintered body with a porosity of 42% and an average pore diameter of 11 µm, and had a size of 34.3 mm × 34.3 mm × 150 mm, the number of cells of 46.5 pcs/cm² (300 cpsi) and a thickness of virtually all the cell walls 23 of 0.25 mm.

By using a heat resistant adhesive paste containing 30% by weight of alumina fibers having a fiber length of 20 µm, 21% by weight of silicon carbide particles having an average particle diameter of 0.6 µm, 15% by weight of silica sol, 5. 6% by weight of carboxymethyl cellulose and 28 . 4% by weight of water, sixteen pieces of the honeycomb structural ceramic members were bonded to one another, and this was cut by using a diamond cutter so that a cylindrical ceramic block 15 was manufactured. Here, the thickness of the adhesive layer was set to 1 mm.
Here, the respective honeycomb structural ceramic members are bonded to one after another so as to form a tetragonal pillar-shape with a bottom face having a square shape with 4 × 4 pieces, and with respect to the honeycomb structural ceramic members on the four corners of the bottom face, those members, which have a rectangular pillar shape with cells formed in a manner so as to be surrounded by cell walls, each making an angle of 45° relative to the peripheral edge, are used, and with respect to the ceramic honeycomb structural ceramic members on the other portions, those members, which have a rectangular pillar shape with cells formed in a manner so as to be surrounded by cell walls each of which is made in parallel with the peripheral edge, are used.

Next, ceramic fibers made from alumina silicate (shot content: 3%, fiber length: 5 to 100 µm) (23. 3% by weight), which served as inorganic fibers, silicon carbide powder having an average particle diameter of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer having a thickness of 0.2 mm was formed on the peripheral portion of the ceramic block 15 by using the above-mentioned sealing material paste. Further, this sealing material paste layer was dried at 120°C so that a cylindrical honeycomb structured body having a size of 143.8 mm in diameter × 150 mm in length was manufactured.

In the present Example, the honeycomb structured body is constituted by honeycomb structural ceramic members, that is, four pieces of honeycomb structural ceramic members each of which has a tetragonal profile on the shape at the perpendicular cross-section, eight pieces of honeycomb structural ceramic members each of which has a shape at the perpendicular cross-section surrounded by three straight lines and one curve, and four pieces of honeycomb structural ceramic members each of which has a shape at the perpendicular cross-section surrounded by two straight lines and one curve.

Moreover, in the above-mentioned honeycomb structured body, with respect to the honeycomb structural ceramic members each of which has a shape at the perpendicular cross-section surrounded by two straight lines and one curve, among the cell walls, each of cell walls continuously formed from the two straight lines toward the one curve forms a straight line, and this straight line makes an angle of 75° or more relative to a tangent at the intersection with the one curve.
Moreover, each of the straight lines makes an angle of 90° with respect to a tangent at the middle point of the one curve.

In the above-mentioned honeycomb structured body, with respect to the honeycomb structural ceramic members each of which has a shape at the perpendicular cross-section surrounded by two straight lines and one curve, among the respective cell walls, the cell wall that is continuously formed toward the one curve from each of the two straight lines is formed into a straight line, and this straight line makes an angle of 45° relative to at least one of the two straight lines.
Moreover, with respect to the honeycomb structural ceramic members each of which has a shape at the perpendicular cross-section surrounded by three straight lines and one curve, the respective cell walls form straight lines that extend toward the respective three straight lines, and each of these straight lines makes an angle of 90° relative to each of the three straight lines.
Furthermore, with respect to the honeycomb structural ceramic members each of which has a tetragonal profile on the shape at the perpendicular cross-section, each of the cell walls forms a straight line that extends toward each of the sides of the tetragonal profile, and this straight line makes an angle of 90° relative to each of the sides of the tetragonal profile.

### (Examples 2 to 4)

Upon producing the honeycomb structural ceramic members, the same processes as Example 1 were carried out except that the shape of the member C was formed into a shape shown in Tables 1-1 and 1-2 to manufacture a honeycomb structured body.
Here, in Tables 1-1 and 1-2, "an angle formed relative to the peripheral edge" of the member A (the honeycomb structural ceramic member having a tetragonal profile on the shape at the perpendicular cross-section) refers to an angle formed between the straight line made by the cell walls and the peripheral edge. Moreover, "an angle formed relative to the straight line sandwiched by two straight lines" of the member B (the honeycomb structural ceramic member having a shape at the perpendicular cross-section surrounded by three straight lines and one curve) refers to an angle between the straight line formed by the cell walls and a straight line sandwiched by the two straight lines of the peripheral edge, "an angle formed relative to the tangent at the middle point of the curved portion" refers to an angle between the straight line formed by the cell walls and a tangent at the middle point of the curved portion of the peripheral edge, and "an angle formed relative to the tangent at the intersection with the curved portion" refers to an angle between the straight line formed by the cell walls and the tangent at the intersection with the curved portion of the peripheral edge. Moreover, "an angle formed relative to the straight line portion" of the member C (the honeycomb structural ceramic member having a shape at the perpendicular cross-section surround by two straight lines and one curve) refers to an angle made by the straight line formed by the cell wall and the straight line portion of the peripheral edge, and the definitions of "an angle formed relative to the tangent at the middle point of the curved portion" and "an angle formed relative to the tangent at the intersection with the curved portion" thereof are the same as those of the member B.

### (Example 5)

Upon producing the honeycomb structural ceramic members, the same processes as those of Example 1 were carried out except that the shape of the member B was formed into a shape as shown in Tables 1-1 and 1-2 so that a honeycomb structured body was manufactured.

### (Example 6)

Upon producing the honeycomb structural ceramic members, the same processes as those of Example 1 were carried out except that the thickness of the cell wall of the member C was set to a value as shown in Tables 1-1 and 1-2 so that a honeycomb structured body was manufactured.

### (Example 7)

Upon producing the honeycomb structural ceramic members, the same processes as those of Example 1 were carried out except that the cell density of the member C was set to a value as shown in Tables 1-1 and 1-2 so that a honeycomb structured body was manufactured.

### (Example 8)

Upon producing the honeycomb structural ceramic members, the same processes as those of Example 1 were carried out except that the porosity of the member C was set to a value as shown in Tables 1-1 and 1-2 so that a honeycomb structured body was manufactured.

### (Example 9)

Upon producing the honeycomb structural ceramic members, the same processes as those of Example 1 were carried out except that the shape of the member C was formed into a shape as shown in Tables 1-1 and 1-2 so that a honeycomb structured body was manufactured.

### (Example 10)

The same processes as those of Example 1 were carried out to manufacture a pillar-shaped honeycomb structured body with a bottom face having an elliptical shape with 17.5 mm in major axis × 10.4 mm in minor axis, except that, upon bonding the respective honeycomb structural ceramic members, the bonding processes were conducted so as to form a tetragonal pillar-shape with a bottom face having a rectangular shape with 3 × 5 pieces, that with respect to the honeycomb structural ceramic members on the four corners of the bottom face, those members having a rectangular pillar shape with cells formed in a manner so as to be surroundedby cell walls, each making an angle of 45° relative to the peripheral edge, were used, and that with respect to the honeycomb structural ceramic members on the other portions, those members having a rectangular pillar shape with cells formed in a manner so as to be surrounded by cell walls, each being made in parallel with the peripheral edge, were used.
Here, in the present specification, the length of the major axis of the elliptical shape refers to a length of the longest portion that passes through the center of the elliptical shape, and the length of the minor axis refers to a length of the portion that crosses perpendicularly to the major axis at the center of the elliptical shape.

### (Example 11)

Upon producing the honeycomb structural ceramic members, the same processes as those of Example 1 were carried out except that the shape of the member C was formed into a shape as shown in Tables 1-1 and 1-2 so that a honeycomb structured body was manufactured.

### (Example 12)

Upon producing the honeycomb structural ceramic members, the same processes as those of Example 1 were carried out except that the shapes of the member B and the member C were formed into shapes as shown in Tables 1-1 and 1-2 so that a honeycomb structured body was manufactured.

### (Example 13)

Upon producing the honeycomb structural ceramic members, the same processes as those of Example 1 were carried out except that the thickness of the cell wall of the member C was set to a value as shown in Tables 1-1 and 1-2 so that a honeycomb structured body was manufactured.

### (Comparative Examples 1 to 4)

Upon producing the honeycomb structural ceramic members, the same processes as those of Example 1 were carried out except that the shapes of the respective cell walls were formed into shapes as shown in Tables 1-1 and 1-2 so that a honeycomb structured body was manufactured.

### (Comparative Example 5)

Upon producing the honeycomb structural ceramic members, the same processes as those of Comparative Example 1 were carried out except that with respect to the member A, the member in which respective cell walls make straight lines extending toward the respective sides of the peripheral edge of the tetragonal profile, with each of the straight lines making 45° relative to the corresponding side of the tetragonal profile, was used so that a honeycomb structured body was manufactured.

### (Comparative Example 6)

Upon producing the honeycomb structural ceramic members, the same processes as those of Comparative Example 1 were carried out except that the thickness of the cell wall of the member C was set to a value as shown in Tables 1-1 and 1-2 so that a honeycomb structured body was manufactured.

### (Comparative Example 7)

Upon producing the honeycomb structural ceramic members, the same processes as those of Comparative Example 1 were carried out except that the cell density of the member C was set to a value as shown in Tables 1-1 and 1-2 so that a honeycomb structured body was manufactured.

### (Comparative Example 8)

Upon producing the honeycomb structural ceramic members, the same processes as those of Comparative Example 1 were carried out except that the porosity of the member C was set to a value as shown in Tables 1-1 and 1-2 so that a honeycomb structured body was manufactured.

### (Comparative Example 9)

Upon producing the honeycomb structural ceramic members, the same processes as those of Example 10 were carried out except that the shapes of the respective cell walls were formed into shapes as shown in Tables 1-1 and 1-2 so that a honeycomb structured body was manufactured.

### (Comparative Example 10)

Upon producing the honeycomb structural ceramic members, the same processes as those of Comparative Example 1 were carried out except that the thickness of the cell wall and the cell density of the member C were set to values as shown in Tables 1-1 and 1-2 so that a honeycomb structured body was manufactured.

### (Comparative Example 11)

The same processes as those of Comparative Example 1 were carried out except that, upon carrying out a cutting process on the aggregatedbodyof the bonded honeycomb structural ceramic members to form a cylindrical shape as in Comparative Example 1, the honeycomb ceramic bodies C to be placed at the four corners were cut deeper than those of Comparative Example 1 by 10 mm, with a sealing material layer also being formed on each of the cut portions, so that a honeycomb structured body was manufactured.
In the honeycomb structured body manufactured in the present Comparative Example, only the portion of the member C had a sealing material layer that was thicker than those of the other portions by 10 mm.

### (Comparative Example 12)

The same processes as those of Example 1 were carried out except that the sealing material layer on the peripheral portion was not formed so that a honeycomb structured body was manufactured.

### (Evaluation)

### (1) Measurements on porosity, etc.

By using a porosimeter (Auto Pore II I 9420, made by Shimadzu Corp.) for a mercury injection method, the pore distribution was measured in a range of the pore diameter from 0.1 to 360 µm through a mercury injection method.
Tables 1-1 and 1-2 show the porosity and the average pore diameter of the honeycomb structural ceramic members obtained by the above-mentioned measurements.

### (2) Measurements of pressure loss

Each of the honeycomb structured bodies relating to the Examples and Comparative Examples was placed in an exhaust-gas passage of a blower (fan), and an air flow was applied thereto at a flow rate of 750 m³/hr; thus, the pressure loss of the honeycomb structured body was measured. The results thereof are shown in Table 2.

### (3) Measurements of isostatic strength

By conducting the test in compliance with JASO Standard M505-87 of Automobile Standard, an applied pressure at the time of breakage was measured, and this value was defined as the isostatic strength (MPa) . The results thereof are shown in Table 2.

### (3) Rate of occurrence of cracks at the time of canning

Each of the honeycomb structured bodies relating to Examples and Comparative Examples was housed in a casing, and the honeycomb structured body was then taken out, and visually observed for any breakage in the honeycomb structured body, as well as for occurrence of a crack in the cell wall. Table 2 shows the results thereof. Here, the number of the samples was set to 10.

**Table 1-1**

| | Honeycomb structural ceramic member | | | | | | | | | | | |
|---|---|---|---|---|---|---|---|---|---|---|---|---|
| | Number of members Angle (°) (length × width) | Member A | Member B | | | Member C | | | | | | |
| | | relative to peripheral edge | Angle (°) relative to straight line sandwiched by two straight lines | Angle (°) Angle (°) relative to tangent at middle point of curve | Angle (°) relative to tangent at intersection with curve | Angle (°) relative to straight line | relative to tangent at middle point of curve | relative to tangent at intersection with curve | Thickness of cell wall (mm) | Cell density (pieces/cm²) | Average pore diameter (µm) | Porosity (%) |
| Example 1 | 4 × 4 | 90 | 90 | 76 | ≥61 | 45 | 90 | ≥75 | 0.25 | 96.5 | 11 | 42 |
| Example 2 | 4 × 4 | 90 | 90 | 76 | ≥61 | 40/50 | 85 | ≥70 | 0.25 | 46.5 | 11 | 42 |
| Example 3 | 4 × 4 | 90 | 90 | 76 | ≥61 | 35/55 | 80 | ≥65 | 0.25 | 46.5 | 11 | 42 |
| Example 4 | 4 × 4 | 90 | 90 | 76 | ≥61 | 30/60 | 75 | ≥60 | 0.25 | 46.5 | 11 | 42 |
| Example 5 | 4 × 4 | 90 | 76 | 90 | ≥74 | 45 | 90 | ≥75 | 0.25 | 46.5 | 11 | 42 |
| Example 6 | 4 × 4 | 90 | 90 | 76 | ≥61 | 45 | 90 | ≥75 | 0.3 | 46.5 | 11 | 42 |
| Example 7 | 4 × 4 | 90 | 90 | 76 | ≥61 | 45 | 90 | ≥75 | 0.25 | 54.3 | 11 | 42 |
| Example 8 | 4 × 4 | 90 | 90 | 76 | ≥61 | 45 | 90 | ≥75 | 0.25 | 46.5 | 11 | 37 |
| Example 9 | 4 × 4 | 90 | 90 | 76 | ≥61 | 25/65 | 70 | ≥55 | 0.25 | 46.5 | 11 | 42 |
| Example 10 | 3 × 5 | 90 | 90 | 77 | ≥58 | 45 | 80 | ≥75 | 0.25 | 46.5 | 11 | 92 |
| Example 11 | 4 × 4 | 90 | 90 | 76 | ≥61 | 30 to 60 | 75 to 90 | 90 | 0.25 | 46.5 | 11 | 42 |
| Example 12 | 4 × 4 | 90 | 60 to 90 | 76 to 90 | 90 | 30 to 60 | 75 to 90 | 90 | 0.25 | 46.5 | 11 | 42 |
| Example 13 | 4 × 4 | 90 | 90 | 76 | ≥61 | 45 | 90 | ≥75 | 0.35 | 46.5 | 11 | 42 |

| | | | | | | | | | | | | |
|---|---|---|---|---|---|---|---|---|---|---|---|---|
| Member A: Honeycomb structural ceramic member having a tetragonal profile on a shape at the perpendicular cross-section Member B: Honeycomb structural ceramic member having a shape at the perpendicular cross-section surrounded by three straight lines and one curve Member C: Honeycomb structural ceramic member having a shape at the perpendicular cross-section surrounded by two straight lines and one curve | | | | | | | | | | | | |

**Table 1-2**

| | Honeycomb structural ceramic member | | | | | | | | | | | |
|---|---|---|---|---|---|---|---|---|---|---|---|---|
| | Number of members (length × width) | Member A | Member B | | | Member C | | | | | | |
| | | Angle (°) Angle (°) relative to peripheral edge | Angle (°) relative to straight line sandwiched by two middle straight lines | Angle (°) relative to tangent at middle of curve | Angle (°) relative to tangent at intersection with curve | Angle (°) relative to straight line | Angle (°) relativeto tangent at middle point of | Angle (°) relative to tangent at intersection with curve | Thickness of cell wall (mm) | Cell density (pieces/cm²) | Average pore diameter (µm) | Porosity (%) |
| Comparative Example 1 | 4 × 4 | 90 | 90 | 76 | ≥61 | 90 | 45 | ≥45 | 0.25 | 46.5 | 11 | 42 |
| Comparative Example 2 | 4 × 4 | 90 | 90 | 76 | ≥61 | 80 | 55 | ≥50 | 0.25 | 46.5 | 11 | 42 |
| Comparative Example 3 | 4 × 4 | 90 | 90 | 76 | ≥61 | 70 | 65 | ≥50 | 0.25 | 46.5 | 11 | 42 |
| Comparative Example 4 | 4 × 4 | 90 | 90 | 76 | ≥61 | 67 | 68 | ≥53 | 0.25 | 46.5 | 11 | 42 |
| Comparative Example 5 | 4 × 4 | 45 | 90 | 76 | ≥61 | 90 | 45 | ≥45 | 0.25 | 46.5 | 11 | 42 |
| Comparative Example 6 | 4 × 4 | 90 | 90 | 76 | ≥61 | 90 | 45 | ≥45 | 0.3 | 46.5 | 11 | 42 |
| Comparative Example 7 | 4 × 4 | 90 | 90 | 76 | ≥61 | 90 | 45 | ≥45 | 0.25 | 54.3 | 11 | 42 |
| Comparative Example 8 | 4 × 4 | 90 | 90 | 76 | ≥61 | 90 | 45 | ≥45 | 0.25 | 46.5 | 11 | 37 |
| Comparative Example 9 | 3 × 5 | 90 | 90 | 76 | ≥61 | 90 | 55 | ≥45 | 0.25 | 46.5 | 11 | 42 |
| Comparative Example 10 | 4 × 4 | 90 | 90 | 76 | ≥61 | 90 | 45 | ≥45 | 0.4 | 31.0 | 11 | 42 |
| Comparative Example 11 | 4 × 4 | 90 | 90 | 76 | ≥61 | 90 | 45 | ≥45 | 90 | 46.5 | 11 | 42 |
| Comparative Example 12 | 4 × 4 | 90 | 90 | 76 | ≥61 | 45 | 90 | ≥75 | 0.25 | 46.5 | 11 | 42 |

| | | | | | | | | | | | | |
|---|---|---|---|---|---|---|---|---|---|---|---|---|
| Member A: Honeycomb structural ceramic member having a tetragonal profile on a shape at the perpendicular cross-section Member B: Honeycomb structural ceramic member having a shape at the perpendicular cross-section surrounded by three straight lines and one curve Member C: Honeycomb structural ceramic member having a shape at the perpendicular cross-section surrounded by two straight lines and one curve | | | | | | | | | | | | |

**Table 2**

| | Isostatic strength (MPa) | Pressure loss (kPa) | Cracks at the time of canning |
|---|---|---|---|
| Example 1 | 8.2 | 13.1 | 0/10 |
| Example 2 | 8.0 | 13.1 | 0/10 |
| Example 3 | 7.5 | 13.1 | 0/10 |
| Example 4 | 7.2 | 13.1 | 0/10 |
| Example 5 | 8.3 | 13.2 | 0/10 |
| Example 6 | 8.5 | 13.3 | 0/10 |
| Example 7 | 8.4 | 13.3 | 0/10 |
| Example 8 | 8.4 | 13.3 | 0/10 |
| Example 9 | 7.0 | 13.1 | 0/10 |
| Example 10 | 7.4 | 13.1 | 0/10 |
| Example 11 | 8.4 | 13.3 | 0/10 |
| Example 12 | 8.7 | 13.5 | 0/10 |
| Example 13 | 8.5 | 16.9 | 0/10 |
| Comparative Example 1 | 6.0 | 13.1 | 8/10 |
| Comparative Example 2 | 6.0 | 13.1 | 8/10 |
| Comparative Example 3 | 6.2 | 13.1 | 7/10 |
| Comparative Example 4 | 6.4 | 13.1 | 6/10 |
| Comparative Example 5 | 6.0 | 13.1 | 8/10 |
| Comparative Example 6 | 6.4 | 13.3 | 7/10 |
| Comparative Example 7 | 6.4 | 13.3 | 7/10 |
| Comparative Example 8 | 6.3 | 13.3 | 8/10 |
| Comparative Example 9 | 5.9 | 13.1 | 8/10 |
| Comparative Example 10 | 11.0 | 16.2 | 0/10 |
| Comparative Example 11 | 6.4 | 13.4 | 6/10 |
| Comparative Example 12 | 6.5 | 13.0 | 6/10 |

As indicated by Table 2, in the honeycomb structured bodies relating to Examples, there was no occurrence of cracks in the cell walls in the honeycomb structured bodies.
In contrast, in the honeycomb structured bodies relating to Comparative Examples (except for Comparative Example 10), the isostatic strength is smaller in comparison with that of the honeycomb structured bodies of Examples, and there were occurrences of cracks in the cell walls at the time of canning. Moreover, most of the members having cracks in the cell walls were honeycomb structural ceramic members C.
Here, the honeycomb structured body relating to Comparative Example 10 was high in the isostatic strength andhadno occurrence of cracks in the cell walls at the time of canning; however, it had a high pressure loss.

### BRIEF DESCRIPTION OF THE DRAWINGS

Fig. 1 is a perspective view that schematically shows one example of a honeycomb structured body of the first aspect of the present invention.
Fig. 2(a) is a perspective view that shows one of the honeycomb structural ceramic members that forms the honeycomb structuredbody shown in Fig. 1, and Fig. 2 (b) is a cross-sectional view taken along line A-A of the honeycomb structural ceramic member shown in Fig. 2(a).
Fig. 3 is a perspective view that shows another honeycomb structural ceramic member that forms the honeycomb structured body shown in Fig. 1.
Fig. 4 is a perspective view that shows another honeycomb structural ceramic member that forms the honeycomb structured body shown in Fig. 1.
Fig. 5 is a perspective view that schematically shows another example of the honeycomb structural ceramic member that forms the honeycomb structured body of the present invention.
Fig. 6 is a perspective view that schematically shows another example of the honeycomb structural ceramic member that forms the honeycomb structured body of the present invention.
Fig. 7 is a perspective view that schematically shows another example of the honeycomb structured body of the present invention.
Fig. 8 is a perspective view that schematically shows another example of the honeycomb structured body of the present invention.
Fig. 9 is a cross-sectional view that schematically shows one example of an exhaust gas purifying device for a vehicle in which the honeycomb structured body of the present invention is installed.
Fig. 10 is a perspective view that schematically shows one example of a honeycomb structured body of the second aspect of the present invention.
Fig. 11 is a perspective view that schematically shows one example of a honeycomb structured body of the third aspect of the present invention.

### EXPLANATION OF SYMBOLS

10a, 10b, 10c, 20a, 20b, 20c, 30a, 30b, 30c, 40a, 40b, 40c, 50a, 50b, 50c Honeycomb structural ceramic member
11 Sealing material layer (adhesive layer)
12 Sealing material layer (coat layer)
13a, 13b, 13c Cell
14a, 14b, 14c Cell wall
15a Plug

## Claims

1. A honeycomb structured body comprising
one or a plurality of pillar-shaped honeycomb structural ceramic members, in each of which cells having a tetragonal shape or a shape similar to a tetragonal shape on a cross-section perpendicular to the longitudinal direction are placed in parallel with one another in the longitudinal direction with a cell wall therebetween,
wherein
a sealing material layer is formed on a peripheral portion of said honeycomb structured body, and
on the cross-section perpendicular to the longitudinal direction in said honeycomb structural ceramic member, among cell walls, each of the cell walls that are continuously formed from the peripheral side of said honeycomb structuredbody toward the inside of said honeycomb structured body is allowed to form a straight line, where the straight line makes an angle from 55° to 90° relative to a tangent at an intersection with the peripheral edge of a honeycomb structural ceramic member which forms the peripheral portion of said honeycomb structured body.

2. The honeycomb structured body according to claim 1 comprising a plurality of honeycomb structural ceramic members,
wherein
at least one honeycomb structural ceramic member having a tetragonal profile on the cross-section perpendicular to the longitudinal direction,
at least one honeycomb structural ceramic member having a shape surrounded by three straight lines and one curve on the cross-section perpendicular to the longitudinal direction, and
at least one honeycomb structural ceramic member having a shape surrounded by two straight lines and one curve on the cross-section perpendicular to the longitudinal direction are included as the honeycomb structural ceramic members, and
on the cross-section perpendicular to the longitudinal direction in said honeycomb structural ceramic member having the shape surrounded by two straight lines and one curve on the cross-section perpendicular to the longitudinal direction,
among cell walls that are continuously formed from the peripheral side of said honeycomb structured body toward the inside of said honeycomb structured body, each of the cell walls that are continuously formed from said one curve toward either one of said two straight lines is allowed to form a straight line, where the straight line makes an angle from 55° to 90° relative to a tangent at an intersection with said one curve.

3. The honeycomb structured body according to claim 2,
wherein
on the cross-section perpendicular to the longitudinal direction in said honeycomb structural ceramic member having the shape surrounded by three straight lines and one curve on the cross-section perpendicular to the longitudinal direction,
among cell walls, each of the cell walls that are continuously formed from said one curve toward the straight line sandwiched by the two straight lines is allowed to form a straight line, where the straight line makes an angle from 55° to 90° relative to a tangent at an intersection with said one curve.

4. The honeycomb structured body according to any of claims 1 to 3,
wherein
the shape of the honeycomb structured body on the cross-section perpendicular to the longitudinal direction is surrounded by only a curve or a curve and a straight line.

5. The honeycomb structured body according to claim 4,
wherein
said shape surrounded by only a curve is a round shape.

6. The honeycomb structured body according to any of claims 1 to 5,
wherein
the porous ceramic is made of silicon carbide based ceramic.

7. The honeycomb structured body according to any of claims 1 to 6,
which is used as a filter for an exhaust gas purifying device of vehicles.

8. A honeycomb structured body in which
a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween,
wherein
a sealing material layer is formed on a peripheral portion of said honeycomb structured body;
at least one honeycomb structural ceramic member having a tetragonal profile on the cross-section perpendicular to the longitudinal direction,
at least one honeycomb structural ceramic member having a shape surrounded by three straight lines and one curve on the cross-section perpendicular to the longitudinal direction, and
at least one honeycomb structural ceramic member having a shape surrounded by two straight lines and one curve on the cross-section perpendicular to the longitudinal direction, are included as the honeycomb structural ceramic members; and
on the cross-section perpendicular to the longitudinal direction in said honeycomb structural ceramic member having the shape surrounded by two straight lines and one curve on the cross-section perpendicular to the longitudinal direction, among cell walls, each of the cell walls that are continuously formed from the peripheral side of said honeycomb structured body toward the inside of said honeycomb structured body and are continuously formed from said one curve toward either one of said two straight lines is allowed to form a straight line,
where the straight line makes an angle from 70° to 90° relative to a tangent at the middle point of said one curve.

9. The honeycomb structured body according to claim 8,
wherein
on the cross-section perpendicular to the longitudinal direction in said honeycomb structural ceramic member having the shape surrounded by three straight lines and one curve on the cross-section perpendicular to the longitudinal direction, among cell walls, each of the cell walls that are continuously formed from said one curve toward the straight line sandwiched by the two straight lines is allowed to form a straight line, where the straight line makes an angle from 70° to 90° relative to a tangent at the middle point of said one curve.

10. The honeycomb structured body according to claim 8 or 9,
wherein
the shape of the honeycomb structured body on the cross-section perpendicular to the longitudinal direction is surrounded by only a curve or a curve and a straight line.

11. The honeycomb structured body according to claim 10,
wherein
said shape surrounded by only a curve is a round shape.

12. The honeycomb structured body according to any of claims 8 to 11,
wherein
the porous ceramic is made of silicon carbide based ceramic.

13. The honeycomb structured body according to any of claims 8 to 12,
which is used as a filter for an exhaust gas purifying device of vehicles.

14. A honeycomb structured body in which
a plurality of pillar-shaped honeycomb structural ceramic members are combined with one another by interposing a sealing material layer, each of the ceramic members comprising cells having a tetragonal shape or a shape similar to a tetragonal shape on a cross-section perpendicular to the longitudinal direction, the cells being placed in parallel with one another in the longitudinal direction with a cell wall therebetween,
wherein
at an outer position in said honeycomb structured body, a honeycomb structural ceramic member, having a peripheral edge surrounded by a straight line and a curve on the cross-section perpendicular to the longitudinal direction, is placed,
at an inner position in said honeycomb structured body, a honeycomb structural ceramic member, having a peripheral edge surrounded by only straight lines on the cross-section perpendicular to the longitudinal direction, is placed,
a sealing material layer is formed on a peripheral portion of said honeycomb structured body, and
said honeycomb structured body comprises:
a honeycomb structural ceramic member that has a structure in which cell walls continuously formed toward the straight line portion of said peripheral edge are allowed to form a straight line, where an angle between the straight line and the straight line portion of said peripheral edge is 90° and
a honeycomb structural ceramic member that has a structure in which said angle is in the range of 25° to 65°, as the honeycomb structural ceramic member placed at the outer position in said honeycomb structured body; and
a honeycomb structural ceramic member that has a structure in which cell walls continuously formed toward the straight line portion of said peripheral edge are allowed to form a straight line, where an angle between the straight line and the straight line portion of said peripheral edge is 90°, as the honeycomb structural ceramic member placed at the inner position in said honeycomb structured body.

15. The honeycomb structured body according to claim 14,
wherein
on the cross-section perpendicular to the longitudinal direction, the honeycomb structural ceramic members, which are locatedmost closely to the respective vertexes of a hypothetical rectangle that inscribes said honeycomb structured body and has sides parallel with respective sides of said honey comb structural ceramic member having a peripheral edge surrounded by only straight lines, are the honeycomb structural ceramic members placed at the outer position in said honeycomb structured body with said angle being in the range of 25° to 65°.

16. The honeycomb structured body according to claim 14 or 15,
wherein
the shape of the honeycomb structured body on the cross-section perpendicular to the longitudinal direction is surrounded by only a curve or a curve and a straight line.

17. The honeycomb structured body according to claim 16,
wherein
said shape surrounded by only a curve is a round shape.

18. The honeycomb structured body according to any of claims 14 to 17,
wherein
the porous ceramic is made of silicon carbide based ceramic.

19. The honeycomb structured body according to any of claims 14 to 18,
which is used as a filter for an exhaust gas purifying device of vehicles.
